(19) Europäisches Patentamt
European Patent Office
Office européen des brevets

(11) **EP 1 920 300 B1**

(12) **EUROPÄISCHE PATENTSCHRIFT**

(45) Veröffentlichungstag und Bekanntmachung des Hinweises auf die Patenterteilung:
**28.07.2010 Patentblatt 2010/30**

(21) Anmeldenummer: 06721922.0

(22) Anmeldetag: **21.04.2006**

(51) Int Cl.:
***G05B 19/048*** *(2006.01)*     ***G05B 19/408*** *(2006.01)*
***B29C 45/84*** *(2006.01)*      ***B29C 45/76*** *(2006.01)*

(86) Internationale Anmeldenummer:
**PCT/CH2006/000220**

(87) Internationale Veröffentlichungsnummer:
**WO 2006/114011 (02.11.2006 Gazette 2006/44)**

(54) **VERFAHREN UND VORRICHTUNG ZUR AUTOMATISCHEN ÜBERWACHUNG VON REPETITIVEN ABLÄUFEN EINER SPRITZGIESSMASCHINE**

METHOD AND DEVICE FOR AUTOMATICALLY MONITORING REPETITIVE OPERATIONAL SEQUENCES OF AN INJECTION MOLDING MACHINE

PROCEDE ET DISPOSITIF POUR LA SURVEILLANCE AUTOMATIQUE D'OPERATIONS REPETITIVES D'UNE PRESSE D'INJECTION

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **28.04.2005  CH 751052005**

(43) Veröffentlichungstag der Anmeldung:
**14.05.2008   Patentblatt 2008/20**

(73) Patentinhaber: **Netstal-Maschinen AG**
**8752 Näfels (CH)**

(72) Erfinder:
• **WERFELI, Friedrich**
**CH-8762 Schwändi (CH)**

• **FÄH, Markus**
**CH-8733 Eschenbach (CH)**

(74) Vertreter: **Zollner, Richard**
**KraussMaffei AG**
**Patentabteilung - TS**
**Krauss-Maffei-Strasse 2**
**80997 München (DE)**

(56) Entgegenhaltungen:
**EP-A- 0 096 183     EP-A- 0 674 985**
**EP-A- 1 072 388     DE-A1- 4 345 035**
**US-A- 4 889 667**

**Beschreibung**

**Technisches Gebiet**

Die Erfindung betrifft ein Verfahren zur Überwachung von repetitiven Abläufen an Spritzgießmaschinen und/ oder Handlingsgeräten zu Spritzgießmaschinen und Erkennen von Abweichungen bzw. Störungen in Bezug auf den Ablauf, ferner eine Vorrichtung zur Überwachung von repetitiven Abläufen einer Spritzgießmaschine und/oder Handlingsgeräten zu Spritzgießmaschinen und Erkennen von Abweichungen bzw. Störungen in Bezug auf den Ablauf.

**Stand der Technik**

Ein erstes charakteristisches Merkmal von Spritzgießmaschinen liegt darin, dass Abläufe mit vielen teils unabhängig und teils koordiniert arbeitende Baugruppen mit beweglichen Teilen beteiligt sind. Im Zentrum der Spritzgießmaschine ist die Gießform. Der Formschluss ist eine eigene Baugruppe, mit der die bewegliche Formhälfte für eine Gießbereitschaft in die geschlossene Stellung und, nachdem die Spritzgießteile gegossen und genügend abgekühlt sind, wieder in die geöffnete Stellung gebracht wird. Auf der gegenüberliegenden Seite der Maschine ist das Einspritzaggregat angeordnet. Die Einspritzschnecke kann an die feste Formhälfte zugeführt und nach abgeschlossenem Einspritzvorgang wieder weggeführt werden. Es muss vorausgesetzt werden, dass für die Arbeitsstellung eine recht große Kraft aufgebracht wird:

- Im Falle der Formschließung muss die Kraft so groß sein, dass der in der Form benötigte Schmelzedruck von z.B. 1000 - 2000 bar die Formhälften nicht zu öffnet vermag, so dass zwischen den Formhälften flüssige Schmelze austreten kann.

- Im Falle der Aggregatanpressung gilt gleicherweise, dass die Anpresskraft so groß ist, dass zwischen der Einspritzdüse und der entsprechenden Formeintrittsöffnung kein Spalt entstehen und keine flüssige Schmelze austreten kann.

In beiden Fällen ist es gleichsam eine Kunst, die Anpress- bzw. Schließkräfte genügend groß, aber nicht unnötig groß zu wählen. Es wird deshalb eine optimale Anpresskraft innerhalb eines Höchstverlaufes und Tiefstverlaufes angestrebt. Unabhängig der optimalen Kraft muss sichergestellt werden, dass im automatischen Betrieb keine Maschinenschäden erzeugt werden. Der Schließmechanismus darf die Formschließkraft nicht "blind" aufbringen, wenn z.B. ganze Spritzgießteile oder Kunststoffreste vom vorangehenden Spritzzyklus noch an den Formhälften haften. Im Falle der Spritzdüse darf keine verfestigte Kunststoffschmelze zwischen Form und Spritzdüse vorhanden sein. In beiden Fällen hätte ein "blinder" automatischer Bewegungsablauf der Formschließung bzw. der Zufahrbewegung der Spritzdüse eine fehlerhafte Situation oder sogar Schäden an den beteiligten Bauelementen zur Folge. Zumindest im Falle des Formschlusses wird heute eine Formschlusssicherung vorausgesetzt. Die Formschlusssicherung sollte bei jedwelcher Abweichung im Bewegungsablauf, z.B. nicht reguläre Erhöhungen der Formschließkräfte, sofort einen Notstopp für die Formbewegung einleiten.
Die DE 43 45 034 zeigt eine solche Formschutzsicherung. Als Lösung wird vorgeschlagen:

a) in dem Bereich kurz vor der Berührung der beiden Formhälften die Schließ-bewegung auf 20% bzw. 10% zu verlangsamen,
b) den effektiven Kraftbedarf aller die Bewegung der Formhälften bis zur Berührung entgegenwirkenden Kräfte, besonders die Reibkräfte, bei einem ersten Schließvorgang zu messen und zu speichern, so dass
c) die je nächstfolgende Formschutzphase auf Grund eines dazu festgelegten Toleranzbandes gesteuert bzw. überwacht und bei übermäßigen Kräften sofort ein Stopp eingeleitet wird.

Es wird gleichsam von einer Idealkraft ausgegangen. Eine Abweichung, in der Regel eine Erhöhung der Schließkraft, wird als Fehler erkannt und entsprechend ein Notstopp eingeleitet.
In der EP 0 25 987 wird vorgeschlagen, den Druck- bzw. Kraftverlauf während einer Hubbewegung, z.B. der Werkzeugträger, sinngemäß zur zuvor beschriebenen Schließbewegung, besonders in Bezug auf den zurückgelegten Weg oder die entsprechenden Geschwindigkeitswerte zu überwachen und zu optimieren.
Beide Lösungen haben den Nachteil, dass die Steuerung der Fahrbewegung und die Fahrsicherung gemeinsam, d.h. auf der Basis der gleichen Mittel durchgeführt wird. Die Fahrsicherung ist abhängig von der guten Funktion der Steuerung der Fahrbewegung sowie deren Sensormitteln.
Auch die EP 0 096 183 behandelt ein Verfahren zum Schutz der Formen beim Spritzgießen von Kunststoffen während der Schließung. Die bewegliche Formhälfte wird mit vorgegebenem Geschwindigkeitsprofil gegen die feststehende Form bewegt und der hydraulische Schließdruck auf einen Wert begrenzt, der um einen vorbestimmten einstellbaren Betrag oberhalb eines Normalwertes liegt. Dazu wird vorgeschlagen, dass der Normalwert durch kontinuierliche Messung des zeitlichen Verlaufes des hydraulischen Druckes wenigstens in der Schlussphase der Schließbewegung eines vorangehenden Schließvorganges festgestellt worden ist und der Druckverlauf während des Schließvorganges überwacht wird. Der Schließvorgang wird immer abgebrochen, wenn der hydraulische Druck im Druckverlauf um den vorbestimmten Betrag oberhalb des gemessenen Normalwertes liegt. Als spezielle Ausgestaltung wird ferner vorgeschlagen, dass der Druckverlauf im unmittelbar vorangehenden Schließvorgang jeweils als Normalwert gewählt wird. Die EP 0 096 183 schlägt ein konstantes Toleranzband vor, das nur in einer Situation, nämlich in der Schlussphase der Schließbewegung des Formwerkzeuges, Sinn macht. Die davor liegenden Phasen können auf diese Weise nicht gesichert werden.

In der EP 1 072 388 A2 ist eine Werkzeug-Sicherheitseinrichtung für eine Spritzgießmaschine beschrieben, bei der automatisch ein Referenzwert zur Erfassung einer abnormalen Last auf ein Werkzeug eingestellt wird. Dabei wird die auf einen Servomotor wirkende Last nach einem vorgegebenen Verfahren geschätzt. Ein Störungsmuster wird zyklisch beim Betrieb des Werkzeugs erfasst und abgelegt. Um den oberen Grenzwert zu erhalten, wird zu einem Durchschnittswert ein vorbestimmter Betrag addiert. Wird diese Grenze überschritten, so kommt es zu einem Alarm.

Eine weitere Werkzeug-Sicherheitseinrichtung ist aus der JP 4-368832 bekannt, gemäß welcher ein Störungs-Drehmoment auf einen Servomotors geschätzt wird. Auch in diesem Fall wird ein Alarm zum Schutz des Werkzeugs ausgegeben, wenn das Störungs-Drehmoment einen vorgegebenen Wert überschreitet.

Eine weitere, in der Vergangenheit oft angewendete Lösung liegt darin, dass für den Formschutz ein Fixwert gewählt wird. Die Vorteile solcher Lösungen liegen in der Einfachheit einerseits und andererseits darin, dass keine Rechner-/Speichermittel benötigt werden. Die großen Nachteile liegen aber darin, dass die Fahrsicherung unverhältnismäßig unempfindlich ist und nur für den eigentlichen Formschutz verwendbar ist. Bei allen Lösungen des Standes der Technik ist eine Früherkennung von Störungen kaum möglich

Ein zweites charakteristisches Merkmal ist der zyklische Ablauf bzw. Verlauf von einzelnen Vorgängen. Zumindest von außen betrachtet wiederholen sich alle Bewegungen, Abläufe und Verläufe von Zyklus zu Zyklus, scheinbar ohne irgendwelche Änderungen. Je höher die Qualitätsanforderung und der Automatisationsgrad, desto mehr erkennt man Variationen im Verlauf der einzelnen Parameter. Man versucht im Stand der Technik zumindest einem Teil der Variationen durch immer mehr perfektionierte Regelungen zu begegnen bzw. Variationen auf ein akzeptables Mass zu reduzieren. Hierzu gehören zwei Problemkreise, im ersten Fall mit bewegten Teilen, im zweiten Fall ohne bewegte Teile:

- In einem geregelten Vorgang z.B. beim Einspritzen, wird jeweils eine Größe, z.B. die Geschwindigkeit der Bewegung der Einspritzachse geregelt. Es resultiert daraus ein Einspritzdruck auf die Schmelze. Der Einspritzdruck wird in Bezug auf das Einhalten vorgegebener Bandbreiten überwacht.
- Ein zweiter Problemkreis liegt in Abläufen ohne bewegte Teile. Hierzu ist ein Beispiel die Zwischenkreisspannung von Umrichtern. Auch hier wird eine Bandbreite überwacht.

Interessant ist die Tatsache, dass in allen genannten charakteristischen Merkmalen die kritischen Größen überwacht werden. Dies kann ein Höchstwert oder Tiefstwert sein. Über entsprechende Sensoren oder Ist-Werte aus den betreffenden Komponenten werden bei Über- oder Unterschreiten sofort entsprechende Alarm-Signale an die Maschinensteuerung gegeben, aufgrund denen z.B. eine sofortige Abschaltung bzw. ein Stopp ausgelöst werden kann. Tatsache ist nun aber, dass zumindest bei gravierenden Abweichungen, bei denen ein sofortiges Abschalten bzw. ein sofortiger Stopp eingeleitet werden muss, dieser häufig zu spät erfolgt. Werden die Grenzen zu eng gesetzt, kann dies auf der anderen Seite zu vielen unnötigen Abschaltungen führen. Die Lösungen des Standes der Technik gestatten keine Früherkennungen von sich anbahnenden Diskontinuitäten, Abweichungen oder Störungen des Ablaufes.

Der Erfindung wurde nun die Aufgabe gestellt, ein Verfahren sowie eine Vorrichtung zu suchen, welche allgemeiner anwendbar ist und mit einer möglichst hohen Empfindlichkeit eine automatische Überwachung und Sicherung von repetitiven Abläufen insbesondere der Fahrbewegungen bei Spritzgießmaschinen erlaubt, d.h. eine hohe Sicherheit für einen Notstopp jedoch kein unnötiges Stoppen z.B. der Fahrbewegungen auslöst, und Störungen möglichst früh erkennen lässt.

## Darstellung der Erfindung

Das erfindungsgemäße Verfahren ist dadurch gekennzeichnet, dass im normalen Produktionsbetrieb der repetitive Ablauf wenigstens eines Teilprozesses vorgegeben ist und eine durch den Teilprozess beeinflusste messbare Größe in Bezug auf die Ablaufüberwachung in kurzen Abtastintervallen automatisch erfasst und mit Grenzwerten verglichen wird, wobei bei der ersten Inbetriebnahme eine Start-Referenzkurze mit einer Startsicherheit festgelegt wird. Bei diesem Verfahren werden die Grenzwerte aus Abtastgruppen von früheren Abtastwerten von vorangehenden Zyklen des selben Ablaufes über einen Algorithmus gebildet und selbstlernend als Vorgabe zur Bildung von Vergleichsgrenzwerten und von einer Betriebsreferenzkurve verwendet, wobei eine Start-Referenzkurve für die Folgezyklen stufenweise selbstadaptierend auf die Betriebsreferenzkurve abgesenkt wird. Die erfasste messbare Größe wird mit der Betriebsreferenzkurve verglichen.

Die erfindungsgemäße Vorrichtung ist dadurch gekennzeichnet, dass im normalen Produktionsbetrieb der repetitive Ablauf bzw. Verlauf vorgebbar ist, und die Vorrichtung Speicher-/Rechnermittel insbesondere Sensormittel aufweist, über welche innerhalb eines Teilprozesses beeinflusste messbare Größen in Bezug auf die Ablaufüberwachung in kurzen Abtastintervallen automatisch erfassbar und mit Grenzwerten vergleichbar sind. Dabei sind die Speicher-/ Rechnermittel ausgebildet, um Grenzwerte aus Abtastgruppen von früheren Abtastwerten von vorangehenden Zyklen desselben Ablaufes über einen Algorithmus zu bilden und um die Grenzwerte selbstlernend als Vorgabe zur Bildung von Vergleichsgrenzwerten und von einer Betriebsreferenzkurve zu verwenden. Überdies sind die Speicher- / Rechnermittel ausgebildet, um die erfasste messbare Größe mit einer Betriebsreferenzkurve zu vergleichen, wobei im Falle der Inbetriebnahme der Maschine die Betriebsreferenzkurve in Bezug auf vorgebbare Grenzwerte absenkbar ist.

Sehr interessant ist, dass die neue Erfindung drei neue Lösungswege ermöglicht.

1) Es kann eine mit viel höherem Standard arbeitende Fahrwegsicherung realisiert werden.

2) Es können bei einzelnen geregelten Vorgängen, wie etwa beim Einspritzen die jeweils nicht geregelten Parameter erfindungsgemäß überwacht werden.

3) Es können aber auch bei Komponenten ohne bewegte Teile z.B. die Umrichterspannung erfindungsgemäß überwacht werden.

Wie in der Folge noch dargelegt wird, überwacht die neue Erfindung nicht nur den Moment einer Störung, sondern arbeitet aufgrund von früheren gleichen Abläufen und erkennt bereits sich anbahnende Störungen. Man nimmt das Vergangene und beurteilt in jedem Moment in einer Art vorausschauend eine sich möglicherweise entwickelnde Störung, wobei die Empfindlichkeit in Bezug auf einen Alarm- oder Abbruchentscheid automatisch an die Prozess-Streuungen angepasst wird für eine Überwachung und höchstmöglicher Empfindlichkeit, jedoch ohne Fehlansprechung.

Von den Erfindern ist erkannt worden, dass gemäß dem ersten Lösungsweg das Grunderfordernis der Überwachung der Fahrbewegung im Stand der Technik zu wenig beachtet wurde. Das Grunderfordernis liegt in der speziellen Eigenheit von Spritzgießmaschinen, bei denen beinahe alle Bewegungen durch den Ablauf des Spritzgießprozesses bestimmt sind. Bei den beweglichen Achsen der Spritzgießmaschine kennt man nicht die klassische Einteilung von nahezu kraftloser Zufahrt an die Arbeitsstelle und danach einen größeren Einsatz des Arbeitswerkzeuges, wie beispielsweise bei einer Fräs- oder Bohrmaschine. Die Zufahrt in sich kann bereits mit größeren Problemen behaftet sein. Die Probleme jedwelcher Art entstehen im Inneren der Maschine, zum Teil sogar völlig verschlossen im Werkzeug.

Das Ziel der automatischen Überwachung muss deshalb sein:

- die Überwachung einzelner oder aller Ablaufphasen, bei Bewegungen vorwärts und rückwärts;
- die Überwachung und Fahrsicherung ohne Fehlansprechung;
- Es sollen für den normalen Produktionsbetrieb keine rein empirischen Eingaben der Grenzwerte angewendet werden; vielmehr soll während einem Automatikbetrieb eine Selbstoptimierung möglich sein, um allen möglichen normalen Betriebs-zuständen Rechnung zu tragen.
- Es soll die Voraussetzung geschaffen werden, dass eine maximale Empfindlichkeit • automatisch an Prozess-Streuungen, von Schuss zu Schuss, angepasst werden.

Die neue Erfindung sieht deshalb vor, dass repetitive Fahrbewegungen von beweglichen Komponenten der Spritzgießmaschine und/oder Handlingsgeräten zu Spritzgießmaschinen mittels in Abtastintervallen erfassten momentanen Druck/Kraft-Ist-Werten zumindest in Teilabschnitten der Fahrbewegung überwacht werden. Dies beinhaltet eine ständige Optimierung der Fahrsicherung. Ganz wichtig ist die Aufteilung in Teilabschnitte, damit die Fahrsicherung jeder Situation über den ganzen Fahrweg angepasst werden kann.

Die Erfindung erlaubt eine ganze Anzahl besonders vorteilhafter Ausgestaltungen. Es wird dazu auf die Ansprüche 4 bis 17 sowie 19 bis 25 Bezug genommen. Ganz besonders bevorzugt werden mit dem Algorithmus Intervallgrenzwerte bzw. Gruppengrenzwerte ermittelt und für die Folgezyklen zugrunde gelegt. Dies hat den entscheidenden Vorteil, dass nicht, wie im Stand der Technik, eine Sicherheitsband über der ganzen Fahrbewegung festgelegt wird, sondern dass von Situation zu Situation ein momentaner optimaler Grenzwert zur Verfügung gestellt wird, sei es für den Start der normalen, oft beinahe kraftlosen Verschiebungsbewegung oder den grossen Kraftaufbau am Ende der Bewegung, wie beispielsweise beim Formschluss oder beim Anpressen der Einspritzdüse.

Vorteilhafterweise werden die Gruppengrenzwerte statistisch ermittelt und selbstlernend als Vorgabe zur Bildung einer Betriebsreferenzkurve verwendet, wobei die Ermittlung wenigstens über mehrere Zyklen erfolgt. Dies bedeutet, dass die Grenzwerte für jede Situation über dem Fahrweg angepasst werden, was eine maximale Sicherheit, beispielsweise in Bezug auf mögliche Unfälle, sei es hinsichtlich Personen oder Maschinenteile, gewährleistet.

Ein zentraler Gedanke der neuen Lösung liegt in der Beurteilung einer Gruppe von Abtastwerten. Dies gestattet, die Druck-/Kraftwerte in Abtastintervallen von Millisekunden oder Bruchteilen von Sekunds zu messen, zu analysieren und situativ sofort zu reagieren. Damit können Schwankungen sowohl im Höchstverlauf (Peaks) wie auch im Tiefstverlauf innerhalb einer Gruppe von Gruppengrenzwerten optimal berücksichtigt werden, wobei jede Gruppe viele beispielsweise 10 oder mehr Abtastintervalle umfasst. Ein weiterer sehr wichtiger Punkt liegt darin, dass die einzelnen Abtastwerte für die Überwachung der Fahrbewegung in einer Funktion zu den Gruppengrenzwerten beurteilt werden. Ein Abtastwert wird damit nicht mit einem einzelnen früheren Abtastwert an derselben Stelle sondern in Funktion zu einer ganzen Gruppe von früheren Grenzwerten beurteilt. Es besteht ferner die Möglichkeit, dass die Anzahl der Abtastwerte pro Gruppe und der Ort der Gruppe längs der Fahrbewegung situativ festgelegt wird.

Ein weiterer vorteilhafter Ausgestaltungsgedanke liegt darin, dass Schwankungen im Höchstverlauf (Peaks) innerhalb einer Gruppe von nacheinanderfolgenden Abtast-werten erfasst und Veränderungen der Gruppengrenzwerte von Zyklus zu Zyklus

a) bei Erhöhung der abgetasteten Werte für den Folgezyklus unmittelbar und
b) bei Senkung der abgetasteten Werte verzögert berücksichtigt werden.

Eine Erhöhung der Abtastwerte im Höchstverlauf kann eine Gefahrensituation ankündigen. Also muss sofort reagiert werden. Eine Senkung wird kaum eine Gefahr bedeuten, so dass sich eine Verzögerung rechtfertigt.

Umgekehrt ist die Situation im Tiefstverlauf. Schwankungen im Tiefstverlauf werden innerhalb einer Gruppe von nacheinanderfolgenden Abtastwerten erfasst und Veränderungen der Gruppengrenzwertes von Zyklus zu Zyklus

a) bei Erhöhung der abgetasteten Werte für den Folgezyklus verzögert und
b) bei Senkung der abgetasteten Werte unmittelbar berücksichtigt werden.

Wird ein für die Funktion geforderter Tiefstverlauf unterschritten, so ist in der Regel die Ablauffunktion nicht mehr gewährleistet. Je nach Verlauf des Fahrweges kann es vorteilhaft sein, für eine oder mehrere Gruppen Vergleichsgrenzwerte zu ermitteln. Die einzelnen Grenzwerte für die Überwachung der Abtastwerte werden aus den Gruppengrenzwerten mit einer rechnerischen Funktion gebildet.

Ganz besonders bevorzugt werden aus mehreren bzw. vielen nacheinanderfolgenden Abtastwerten ein Gruppengrenzwert errechnet und aus allen errechneten Gruppengrenzwerten eine Referenzkurve gebildet. Dabei wird die Anzahl der Abtastwerte pro Gruppe und die Position bzw. Zeitpunkt der Gruppe im Ablauf innerhalb eines Teilprozesses innerhalb eines Teilprozesses situativ festgelegt. Es ist jedoch auch möglich dass nur in Teilbereichen der Fahrbewegung Vergleichsgrenzwerte ermittelt werden. Die Referenzkurve hat den grossen Vorteil, dass ein Teil oder der ganze Fahrweg gestützt auf alle örtlichen Situationen überwacht wird, ohne dass dauernd unnötige Rechenleistungen gefordert werden. Dabei werden die Gruppenabtastwerte für die Überwachung der Fahrbewegung fortlaufend in eine Funktion zur Referenzkurve beurteilt.

Gemäß einem weiteren sehr vorteilhaften Ausgestaltungsgedanken wird bei der ersten Fahrbewegung bei der Inbetriebnahme der Maschine eine Start-Referenzkurve mit einer Startsicherheit festgelegt, wobei die Start-Referenzkurve für die Folgezyklen stufenweise selbstadaptierend auf eine Betriebs-Vergleichskurve abgesenkt wird. Bei der ersten Inbetriebnahme ist es wichtig, dass nicht durch Sicherheitsmassnahmen wegen jeder kleinen Störung gleich abgeschaltet wird. Es wird vorausgesetzt, dass hier der Einrichter mit höchster Aufmerksamkeit ebenfalls Teil der Überwachung ist. Für eine oder mehrere Abtastgruppen wird aufgrund des Vergleichsgrenzwertes eine Toleranz für einen Alarm- oder einen Abbruchentscheid für die Fortsetzung der Bewegung festgelegt. Eine Abschaltung wird statistisch oder gegebenenfalls aufgrund der Erfahrung entschieden, wobei die Toleranz vorzugsweise so festgelegt wird, dass bei zwei - oder mehrfachem Überschreiten des Start-Vergleichsgrenzwertes ein Signal für den Bewegungsabbruch an die Maschinensteuerung abgegeben wird. Die neue Lösung gestattet, dass die Empfindlichkeit in Bezug auf einen Alarm- oder Abbruchentscheid automatisch an die Prozess-Streuungen angepasst wird mit dem Ziel einer Überwachung mit höchstmöglicher Empfindlichkeit, jedoch ohne Fehlansprechung.

Nach einem weiteren vorteilhaften Lösungsweg wird vorgeschlagen, eine absolute Fahrwegsicherung mit der Vorgabe von fixen Grenzwerten für die Abtastwerte festzulegen, wobei mit den fixen Grenzwerten auch eine obere Begrenzung für den Höchstverlauf der adaptiv festlegbaren Vergleichswerte festgelegt wird. Der Kunde ist auf diese Weise frei, dauernd mit der absoluten Fahrwegsicherung entsprechende Lösungen des Standes der Technik zu fahren. Er hat dabei den Vorteil, dass er einerseits einen zuverlässigen Mitarbeiter und andererseits eine mechanische Sicherheit gegen Beschädigen von Maschinenteilen hat. Es besteht ferner die Möglichkeit, dass der Anwender beispielsweise bei der Inbetriebnahme nur mit der absoluten Fahrwegsicherung arbeitet und erst später die automatische Fahrwegsicherung zuschaltet, bei der die Bewegung über wenigstens einen Teil oder über die ganze Fahrbewegung einstellungsfrei gesichert wird.

Von den Erfindern ist erkannt worden, dass die Fahrsicherung unabhängig bzw. getrennt von den Regel- und Steuervorgaben für die Fahrbewegung organisiert werden muss. Die momentanen Druck-/Kraft-Ist-Werte müssen laufend erfasst werden. Unter Druck-/Kraft-Ist-Werten werden Werte verstanden, welche sich als Reaktion auf die Bewegung, z.B. in Form von örtlichen Träger-, Kolben- oder Lagerbelastungen einstellen. Es kann auch ein hydraulischer Druck oder ein Motordrehmoment sein. Sehr wichtig dabei ist, dass sowohl dynamische Kräfte aus der Beschleunigung wie auch der Verzögerung und Reibkräfte einerseits, und echte Störungen, z.B. Abreißen eines Schmierfilmes oder fehlerhaftes Steckenbleiben von ganzen oder Bruchstücken von Spritzteilen andererseits, erfassbar sind. Es müssen alle der gewünschten Bewegung entgegenstehenden reaktiven Kräfte und entsprechend die tatsächlichen Ist-Werte der Reaktionskräfte gegen die Fahrbewegung festgestellt werden. Eine Störung kann auch darin liegen, dass ein Schmierfilm schlecht ausgebildet ist. Handelt es sich um relativ kleine zu bewegende Massen wie Ausstoßer, jedoch mit beachtlichen Kräften für die entsprechende Funktion, kann die laufende Motorstromaufnahme genügen. Handelt es sich um große zu bewegende Massen, müssen die tatsächlichen reaktiven Kräfte aus der Bewegung, sei es an feststehenden oder bewegten Bauteilen, erfasst werden.

Ein Kerngedanke der neuen Erfindung liegt darin, dass die Fahrsicherung gleichsam im "Hintergrund" bereits beim ersten Spritzzyklus voll aktiv ist, ohne dass der Bediener irgend etwas einstellen muss. In der Praxis wird vom Einrichter z.B. ein neues Werkzeug eingebaut. Dabei kann er, z.B. über Servicestellungen, nicht nur den Bewegungsablauf sondern auch das Aufeinanderpassen der Werkzeughälften überprüfen und justieren. Dies geschieht in der Regel durch Handbetrieb. Es spielt dabei keine Rolle, in welchem Umfang automatische Mittel im Sinne der Überwachung arbeiten. Wichtig ist, dass die Erfassung der Abtastwerte auch beim Betrieb von Hand oder z.B. halbautomatisch beteiligt ist. Die Abtastung der Widerstandskräfte erfolgt in jedem Fall, so dass Werte über dem Fahrweg schon für den ersten Spritzzyklus gespeichert sind. Die Fahrsicherung ist bevorzugt Teil der Maschinensteuerung und kann nur durch entsprechend geschultes Personal, z.B. bei Servicearbeiten, ausgeschaltet werden. Für den regulären Arbeitsprozess ist die Fahrsicherung immer also bereits in der Einrichtphase aktiv und erfasst z.B. fortlaufend die relevanten reaktiven Drücke und/oder Kräfte.

Gemäß einer besonders vorteilhaften Ausgestaltung wird der Weg der beweglichen Teile in eine Vielzahl von kleinen Einzelsituationen aufgeteilt und die Fahrbewegung bezüglich einer Folge von Einzelsituationen gesichert. Damit kann die Fahrsicherung im umgangssprachlichen Sinne situativ arbeiten und erlaubt, die Bewegung über wenigstens einen Teil oder die ganze Fahrbewegung einstellungsfrei zu sichern. Dies hat den entscheidenden Vorteil, dass jedwelche Fahrsituation erfass- und überwachbar ist:

- Anfahren
- konstante Bewegung
- BeschleunigungNerzögerung
- Mitwirkung von großen Trägheitskräften der beteiligten Massen.

Ein weiterer ganz besonders interessanter Gedanke liegt darin, dass die Druck-/Kraftwerte im Bereich von Millisekunden oder Bruchteilen von Millisekunden gemessen und analysiert werden. Das Messen und Analysieren bedingt einen oder mehrere Hochleistungsrechner, da eine Entscheidung bevorzugt innerhalb von z.B. mehreren Millisekunden gefällt wird.

Die neue Lösung schlägt vor, dass schon bei einer ersten Inbetriebnahme des bzw. der beweglichen Teile die Druck-/Kraftwerte gemessen und analysiert werden, wobei die Fahrsicherung adaptiv bzw. lernfähig ausgebildet ist, derart, dass Situationen auf Grund der Eingabe eines früheren ähnlichen Falles vorgebbar sind, oder dass Störungen bei ersten Testläufen durch den Einrichter selbst erkannt und verhindert werden. Hier zeigen sich die Vorteile der situativen Fahrsicherung ganz besonders. Beispielsweise kann die erste sehr kurze Anfahrspitze speziell behandelt und bei Überschreitung eines vorgegebenen fixen Sicherheitswertes unnötige Stopps verhindert werden. Das selbe gilt auch bei starken Beschleunigungen und Verzögerungen von großen Massen. In der konkreten Ausgestaltung wird vorgeschlagen, die Druck-/Kraft-Messwerte während jeder Fahrbewegung zu messen und zu analysieren, wobei pro Abschnitt bzw. Einzelsituation ein Referenzpunkt errechnet und aus der Folge der Referenzpunkte eine Referenzkurve, insbesondere durch lineare Interpolision, gebildet wird. Die Referenzkurve trägt allen speziellen Situationen Rechnung. Eine zwingende Folge ist, dass die Sicherheitsmarge für einen Notstopp zumindest für die wichtigsten Situationen sehr unterschiedlich gewählt wird. Wichtig ist auch, dass nicht jeder kurzfristige Kraft- oder Druck-Ausschlag schon ein Notstopp auslösen kann, sondern dass zumindest z.B. zwei oder drei Anschläge über die gesetzte Limite erst einen Bewegungsstopp auslösen können. Die Druck-/Kraft-Messwerte werden während jeder Fahrbewegung fortlaufend analysiert, und es wird nach einem Algorithmus eine mögliche Fehlersituation ermittelt, wobei der Algorithmus selbst eine Fehlersituation bestimmt. Der Algorithmus kann eine einfache Sicherheitsverhältniszahl oder eine mathematische Formel sein. Die repetitive Fahrbewegung wird mittels der Maschinensteuerung unabhängig der Fahrsicherung vorgegeben. Die Fahrsicherung ermittelt Störsituationen und gibt bei Eintritt einer Fehlersituation der Maschinensteuerung die entsprechenden Signale zur Einleitung oder Vorbereitung der notwendigen Maßnahmen. Die Druck- und/oder Kraftüberwachung für die Fahrsicherung erfolgt vorteilhafterweise unabhängig der Druck- und/oder Kraftsensoren, welche die Maschinensteuerung für die Fahrbewegung benutzt. Dies gilt zumindest für den Formschluss sowie die Aggregatsbewegung.

Besonders bevorzugt wird die Fahrsicherung für die beweglichen Teile des Formschlusses eingesetzt. Weil besonders hier die größten Massen und Kräfte der Spritzgießmaschine im Spiele sind, wird eine reaktive Kraft bzw. ein reaktiver Druck, sei es an den direkt belasteten, den stillstehenden oder den beweglichen Teilen des Formschlusses, ermittelt. Dies kann in dem Bereich der festen Formaufspannplatte des Verschlussmechanismus oder der Antriebsplatte sein. Die neue Lösung eignet sich jedoch als Fahrsicherung für alle bewegten Teile, wie z.B. für die Aggregatverschiebung, die axiale oder rotative Bewegung der Plastifizier- bzw. Extruderschnecke und/oder die beweglichen Teile, den Ausstoßer und/oder die Kernzüge und/oder die Vorrichtungen zur Spritzgießteileentnahme aus der offenen Formen und/oder für Teile eines Shot pots.

Vorteilhafterweise weist die Spritzgießmaschinensteuerung Speichermittel auf, zur Speicherung der für einen speziellen Spritzauftrag ermittelten optimalen Empfindlichkeit und Vorgabe für einen nachfolgenden neuen Spritzauftrag, derart, dass bei Beginn eines ersten Spritzzyklus die Fahrsicherung bereits unterlegt ist, derart, dass der Spritzauftrag ohne Voreinstellung der Fahrsicherung mit voller Fahrsicherung durchführbar ist, so dass bei jedem Nachfolgeauftrag mit dem selben Spritzgießwerkzeug mit der davor ermittelten optimalen Empfindlichkeit gestartet werden kann. Die lernende Fahrsicherung ist ein Teil der Basissoftware und kann von verschiedenen Achsen mit verschiedenen Mess- und Regelgrößen genutzt werden. Diese kann auch für die Spritzdrucküberwachung beim Einspritzen anstelle der jetzigen zweistufigen Überwachung die lernende Fahrsicherung anwenden. Weitere Anwendungsbeispiele könnten, die Überwachung der Geschwindigkeit der Einspritzachse während dem Nachdruck und die Überwachung der Zwischenkreis-spannung während einem Zyklus oder einer Phase des Zykluses sein.

Gemäß dem zweiten Lösungsweg wird eine jeweils nicht geregelte Größe, insbesondere eine Geschwindigkeit, ein Druck, eine Kraft, ein Weg oder ein Drehmoment eines Ablaufes bzw. Verlaufes überwacht. Der große Vorteil liegt darin, das die Erfahrung der Vergangenheit voll in dem Überwachkonzept berücksichtigt wird und damit die Forderung der bestmöglichen Sicherung mit der geringstmöglichen Fehlabschaltquote sichergestellt wird.

Gemäß dem dritten Lösungsweg wird der zyklische Verlauf einer Komponente ohne bewegte Teile überwacht. Je nach Komponente kann es sich um die Überwachung des Stromes (A) oder die Spannung (V) z.B. der Umrichter handeln.

### Kurze Beschreibung der Erfindung

Die Erfindung wird nun an Hand einiger Ausführungsbeispiele mit weiteren Einzel-heiten erläutert. Es zeigen:

| | |
|---|---|
| die Figur 1 | ein schematisiertes Beispiel für den Verlauf der Abtastwerte sowie daraus gebildete Grenzwerte mittels eines Algorithmus auf Grund von früheren Abtastwerten; |
| die Figur 2 | die Bildung einer Referenzkurve aus Gruppengrenzwerten; |
| die Figur 3 | die Gruppengrenzwertbildung als ersten Schritt für die Referenzkurven- bildung gemäß neuer Erfindung; |
| die Figur 4 | die Bildung der Referenzkurve gemäß neuer Erfindung als theoretische Kurve; |
| die Figur 5 | eine gestützt auf Interpolation erzeugte Referenzkurve; |
| die Figur 6 | die konkret gemessenen Ist-Werte in Bezug auf eine vorgängig ermittelte Referenzkurve Rn ... Rm; |
| die Figur 7 | die Optimierung der Empfindlichkeit über einen Zeitslot von 10 ms; |
| die Figur 8 | die von Zyklus zu Zyklus schrittweise Verbesserung der Referenzkurve; |
| die Figur 9 | ein praktisches Beispiel für einen Messwertverlauf über der ganzen Bewegung des Schließwerkzeuges mit einer optimal angepassten Referenzkurve; |
| die Figur 10 | ein Beispiel für die Anwendung der neuen Lösung für die Einspritzüberwachung und die Figur 11 für den Nachdruck; |
| die Figur 12 | ein Einspritzaggregat; |
| die Figuren 13 und 14 | ein Beispiel für die Überwachung der Umrichterspannung; |
| die Figur 15 | eine vereinfachte Darstellung einer Spritzgießmaschine; |
| die Figur 16 | eine Lösung des Standes der Technik gemäß EP 0 025 987; |
| die Figur 17 | eine Lösung des Standes der Technik gemäß EP 0 096 183. |

### Wege und Ausführung der Erfindung

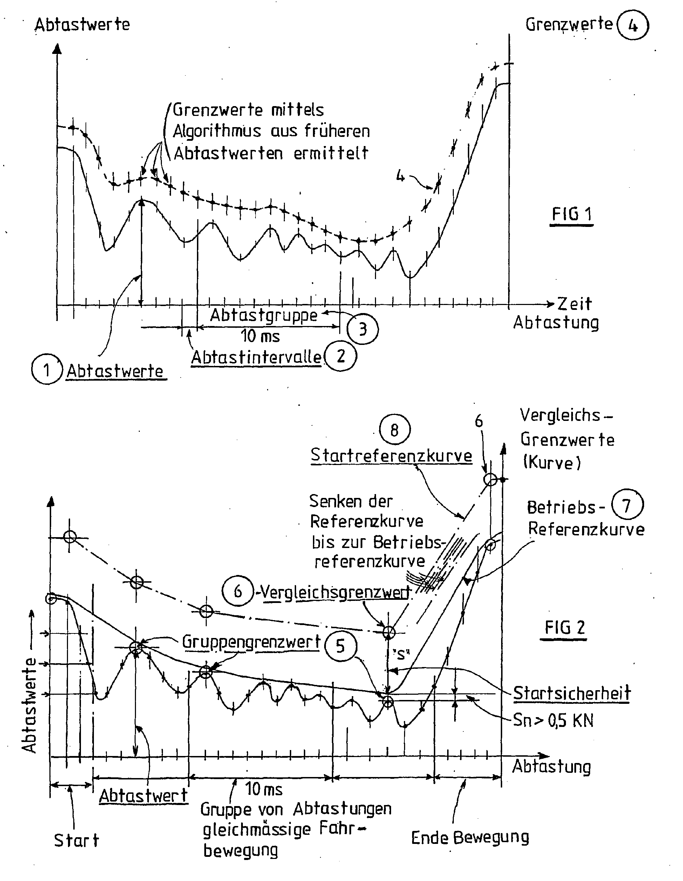

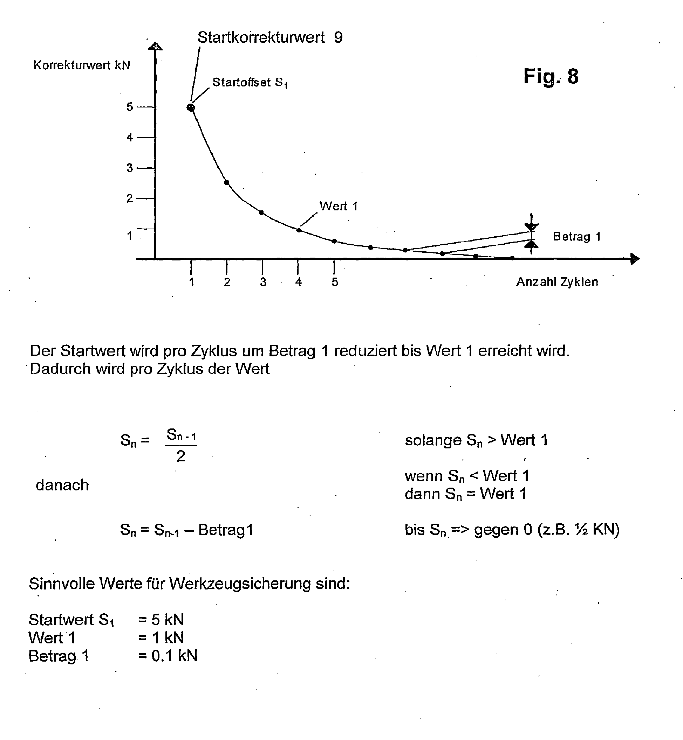

Die Figuren 1 und 2 zeigen rein schematisch den Verlauf der Abtastwerte 1, welche in Abtastintervallen 2 aufgenommen werden. Das Abtastintervall 2 kann, wie im Beispiel gezeigt, eine Millisekunde betragen. Es ist jedoch möglich, dass das Abtast-intervall 2 einen größeren Zeitraum von weniger oder mehr als eine Millisekunde beträgt. Ein sehr interessanter Punkt ist die Zusammenfassung von mehreren Abtastintervallen 2 zu Abtastgruppen 3. Theoretisch könnte zu jedem Abtastwert 1 ein Grenzwert 4 ermittelt werden, dies auf Grund eines entsprechenden Algorithmus. Die neue Lösung geht jedoch einen anderen Weg, indem Abtastgruppen 3 gebildet werden, wie aus der Figur 2 ersichtlich ist. Die neue Erfindung schlägt vor, aud Abtastgruppen 3 Gruppengrenzwerte 5 zu ermitteln. Erst aus den Gruppengrenzwerten 5 werden Vergleichsgrenzwerte 6 und aus den Vergleichsgrenzwerten 6 eine Referenzkurve 7 ermittelt. Wie aus der Figur 2 ersichtlich ist, müssen die Abtastgruppen 3 nicht zwingend gleich viele Abtastintervalle aufweisen. Z.B. können in der Startphase entweder wenige Abtastwerte oder viele Abtastwerte in kürzeren Zeitabständen erfasst werden. Bei einer gleichmäßige Fahrbewegung kann sinngemäß die Anzahl Abtastintervalle viel größer sein. Am Ende der Fahrbewegung kann eine Situation bestehen bleiben wie beim Start. Im praktischen Beispiel wird eine Betriebsreferenzkurve 7 um einen minimalen Wert von z.B. Sn > 0,5 KN höher gesetzt als sich aus einer theoretischen Referenzkurve ergeben wurde. Für den Start wird eine Start-Referenzkurve 8 festgelegt, welche um einen Sicherheitswert "S" höher liegt als die Betriebsreferenzkurve 7, entsprechend der Figur 8, mit einem Start-Korrekturwert 9.

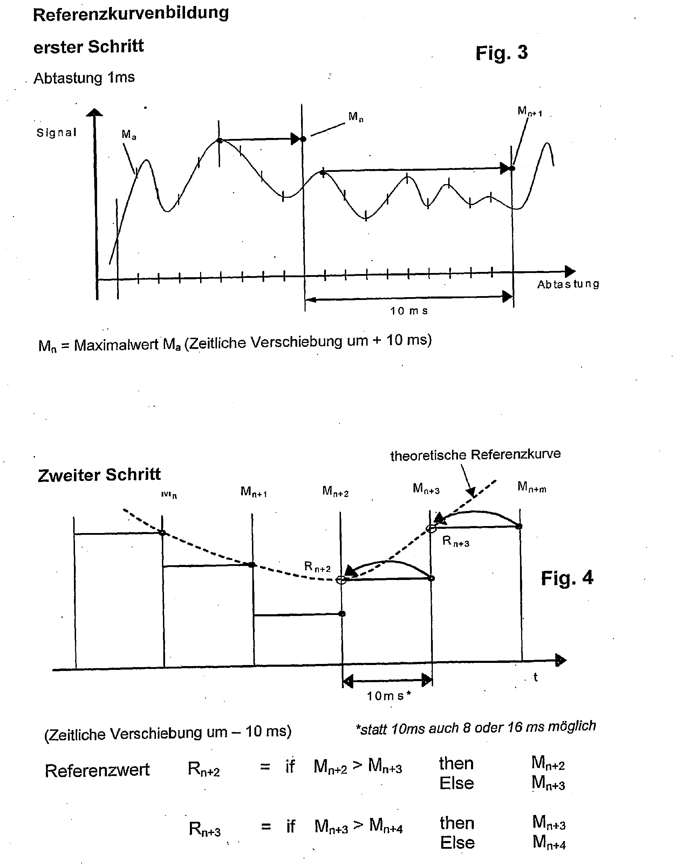

Die Figur 3 zeigt die Gruppengrenzwertbildung als ersten Schritt für die Referenzkurvenbildung. Pro Abtastgruppe wird jeweils der höchste Abtastwert für die Bildung eines Gruppengrenzwertes gewählt.

Die Figur 4 zeigt einen zweiten Schritt der Referenzkurvenbildung. Werden die Sollwertparameter verändert (Position, Geschwindigkeit), muss die Referenzkurve neu aufgebaut werden. Im ersten Zyklus wirkt die feine Werkzeugsicherung nicht, da zuerst Informationen gesammelt werden müssen. Da bei der ersten Inbetriebnahme noch keine Referenzkurve im Sinne der Erfindung besteht, wird mit einer absoluten Fahrwegsicherung z.B. entsprechend den Lösungen des Standes der Technik gearbeitet. Da bei den ersten Zyklen immer Unregelmäßigkeiten und Einlaufeffekte auftreten, soll die Information für die Referenzkurve über mehrere Zyklen gesammelt werden, damit eine statistisch repräsentative Aussage gemacht werden kann. Um ein Fehlansprechen der Werkzeugsicherung während der Phase, wo noch nicht genug Informationen (Anzahl Zyklen) gesammelt sind, zu verhindern, wird ein Start-sicherheitswert "S" zur Referenzkurve addiert, der sicherstellt, dass Fluktuationen nicht zu einem Fehlauslösen der Werkzeugsicherung führen.

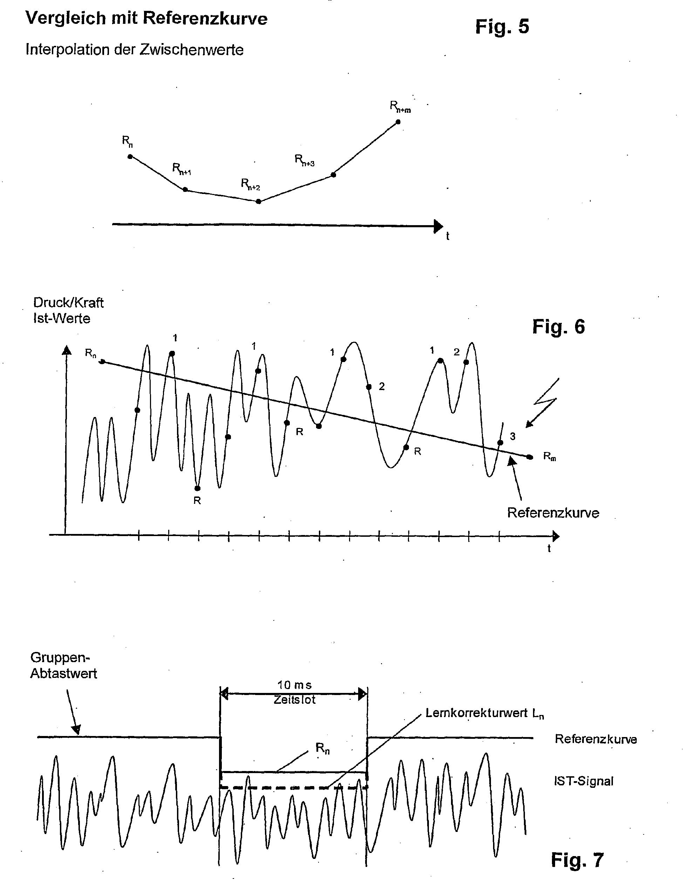

Die Figur 5 zeigt die Interpolation der Zwischenwerte der Referenzkurve.

Die Figur 6 zeigt der Vergleich der Referenzkurven mit den gemessenen Druck-/Kraft/ Ist-Werten. Das Überschreiten der Referenzkurve wird in Folge gezählt. Jedes Unterschreiten der Referenzkurve setzt den Zähler zurück. Erreicht der Zähler z.B. drei Überschreitungen in Folge, so gilt das Kriterium "Überschritten" als erfolgt, so dass sofort ein entsprechendes Signal an die Maschinensteuerung abgegeben wird.

Die Figur 7 zeigt einen Vorschlag für das Optimieren der Empfindlichkeit der Fahrsicherung. Durch Einlaufeffekte kann der Fahrwiderstand kleiner und regelmäßiger werden. Damit die Referenzkurve auch Einlaufeffekte lernen kann, kann der in Figur 7 dargestellte Algorithmus angewendet werden. Für jeden Zeitslot wird geprüft, ob die folgende Bedingung immer erfüllt ist:

$$\text{Referenzkurve R - IST Signal-Lernkorrekturwert L} < 0$$

Ist diese Bedingung während dem ganzen Zeitslot erfüllt, wird ein Zähler, der zum Zeitslot gehört, um +1 erhöht. Erreicht der Zähler die Lerndauer T (Anzahl Zyklen), wird die Referenzkurve in diesem Zeitslot um 1/2 Lernkorrekturwert korrigiert (Subtraktion).

Wird in einem Zyklus die Bedingung nicht erfüllt, wird der Zähler auf 0 zurückgesetzt. Sinnvolle Werte für die Werkzeugsicherung sind:

$$\text{Lerndauer T = 100 Zyklen}$$

$$\text{Lernkorrekturwert = 0,1 kN}$$

Die Figur 8 zeigt den Aufbau der Referenzkurve. Beim Anfahren der Werkzeugschließung gibt es größere Streuungen, da die Startposition der Werkzeugschließbewegung bis zu 0,2 mm streuen kann. Insbesondere nach manueller Betätigung ist die Startposition nicht schon reproduzierbar. Zusätzlich sind die Fahrwiderstände nach längeren Stillstandszeiten höher, da sich zuerst wieder ein Schmierfilm aufbauen muss. Nach Stillstandszeiten größer als Standzeit T1 wird nicht mehr nur die gelernte Referenzkurve verwendet, die in diesen Situationen zu scharf sein könnte, sondern es wird verfahren wie beim Aufbau der Referenzkurve, ausser dass beim Wert 1 gestartet wird. Damit beim Anfahren die Positionsunsicherheiten, die nicht statistisch gelernt werden können (wegen Handbetrieb), nicht zu Fehlauslösungen der Werkzeugsicherung führen, wird generell darauf verzichtet, während den ersten T STARTVERZÖGERUNG beim Werkzeugschließen die Werkzeugsicherung auszulösen. T STARTVERZ = 50 ms.

Adaptive Fahrsicherung: Wird die Maschine das erste Mal mit einem neuen Werkzeug betrieben, ist der Steuerung sehr wenig bekannt über das zu erwartende Kraftmesssignal während der Werkzeugbewegung. Dieses Messsignal ist komplex und kann ohne Zusatzinformationen nur rudimentär ausgewertet werden. In dieser Situation kommt nur ein einfacher Grenzwert zum Zuge. Bei der ersten Bewegung ist nur eine einfache Grenzwert "Basis-Fahrsicherung" wirksam.

Erste Bewegung bedeutet: Die erste Bewegung nach der Veränderung von Parametern, die das Kraftmesssignal beeinflussen können:

- Werkzeugbewegungs- und Werkzeugpositionsparameter,
- evtl. Aggregat anpressen, Ausstoßer, Handling (indirekter Einfluss).

Die eigentliche Werkzeugsicherung im Sinne des Standes der Technik ist nur über den letzten Drittel des Werkzeughubes aktiv, damit eine genügend hohe Empfindlichkeit erreicht werden kann. Es ist denkbar, bei Bedarf für die Einrichtbewegungen einen eigenen Grenzwert zu definieren, da wegen den kleinen Geschwindigkeiten die Empfindlichkeit erhöht werden könnte. Diese Basis-Fahrsicherung ist in allen Betriebszuständen beim Schließen des Werkzeuges wirksam. Wird die Maschine das erste Mal nach Parameteränderungen so betrieben, dass die Bewegungen des Werkzeuges über den ganzen Hub im Automatmodus (nicht Tippbetrieb) mit Produktionsgeschwindigkeiten fahren, wird der Kraftverlauf analysiert und daraus eine Grenzkurve berechnet. Diese Kurve enthält die Information über den Kraftverlauf der Schließbewegung bei den gegebenen Verhältnissen. Diese Bewegungszyklen wiederholen sich beliebig, sind im Wesentlichen identisch, unterscheiden sich aber, indem jede Kurve statistische Abweichungen enthält, die zu einem Fehlansprechen der Überwachung führen können.

Eine wesentliche Aufgabe des Algorithmus, der die Bildung der Referenzkurve und die Auswertung der Fehlerzustände ermöglicht, ist, einerseits diese Streuungen zu berücksichtigen und eine hohe Empfindlichkeit zu erreichen, aber andererseits Fehlauslösungen auszuschließen. Weiter gibt es Einlaufeffekte, temperaturabhängige Kräfte und Einflüsse, die abhängig sind vom Aufbau des Schmierfilms. Bis heute musste sich der Bediener dazu empirisch an die Grenze herantasten, indem er die Empfindlichkeit immer mehr erhöhte, bis er ein Fehlansprechen feststellte. Danach wurde die Empfindlichkeit etwas reduziert und gehofft, dass es nun kein Fehlansprechen mehr gibt, was für einen Betriebspunkt in der Regel auch funktionierte. Die Betrachtungen gelten für alle Bewegungen.

Benutzersicht:

Der Benutzer muss nichts einstellen. Es gibt eine Konfigurationsebene, wo der Algorithmus parametriert werden kann, um Spezialfälle beherrschen zu können.
Parameter: maximale Kraft bei der Schließbewegung
FXXX = 50 kN (1 - 99 kN)
Default: 5 % der maximalen Schließkraft
Parameter: Prozent des Hubes mit aktiver Werkzeugsicherung
YXXX = 30 % (0-100 %)
Default: 30 % des programmierten Hubes.

Test der Empfindlichkeit der Fahrsicherung:

Da die ganze Optimierung verborgen abläuft und der Bediener nichts dazu beitragen muss, könnte der Wunsch entstehen, das Resultat der Optimierung zu quantifizieren. Dazu ist ein einfacher Test geeignet: Dem aktuellen Kraftsignal wird im automatischen Zyklus eine Störung (definiertes Kraftsignal) überlagert, ohne dass der Algorithmus diese lernen kann. Durch Verändern dieser Störung kann eine Auslösung erzeugt und somit vorausgesagt werden, bei welcher Empfindlichkeit die Ansprechschwelle für den aktuellen Produktionszyklus liegt. Die Störung kann bezüglich der Amplitude und der Position des Fahrweges über Parameter eingestellt werden.

Der Bediener erhält drei Parameter: Test ein-/ausschalten
Position des Fahrweges, an der die
Störwirkung ausgelöst wird
Kraftamplitude der Störung

Limite für Adaption:

Einerseits ist das Adaptieren der aktuellen Situation eine Stärke der angewandten Algorithmen, andererseits dürfen langsame Veränderungen, denen die Adaption folgen kann, nicht dazu führen, dass unzulässige Betriebsbereiche erreicht werden. Wenn beispielsweise bei einem Querzug die Schmierung immer schlechter wird, wird mit jedem Zyklus die Reibung etwas größer, bis schlussendlich der Querzug "an-frisst". Um diesen unerwünschten Effekt zu vermeiden, werden Grenzen festgelegt, innerhalb welchen der Algorithmus adaptieren darf. Beim Überschreiten dieser Grenze wird ein entsprechender Fehlerfall generiert und die Fehlerreaktion ausgelöst. Information zur Detektion eines Fahrsicherungsfalles und Test der Reaktion der Fahrsicherung.

Spricht die Überwachung an, wird ein Systemalarm generiert und folgende Parameter mitgegeben: Position und Geschwindigkeit beim Auslösepunkt. Diese beiden Werte erlauben eine Beurteilung des verbleibenden Bremsweges und können mit dem optischen Resultat des eingeklemmten Teiles beurteilt werden. Wird das Teil zu stark gequetscht, so muss die Geschwindigkeit am Auslösepunkt reduziert werden. Die Geschwindigkeit am Auslösepunkt ist der einzige Parameter, der dem Bediener bleibt, um das Ergebnis eines Fahrsicherungsfalles zu beeinflussen. Idealerweise können die Versuche zur Optimierung der Reaktion gemacht werden, ohne dass Teile eingeklemmt werden. Diese Möglichkeit kann geboten werden, indem der Bediener in Produktion ein Fahrsicherungs-Ereignis auslösen kann, ohne dass ein Teil eingeklemmt wird.

Es kann anhand der Information der Systemalarme beurteilt werden, ob die Geschwindigkeit am Auslösepunkt zu hoch ist oder noch weiter angehoben werden kann, damit eine optimale Zykluszeit erreicht wird.

Der Bediener erhält drei Parameter: Test ein-/ausschalten

Position des Fahrwegs, an der die Störung ausgelöst wird

Kraftamplitude der Störung (Amplitude auf Maximum stellen)

Reaktion auf die Fahrsicherungsfälle:

Die Reaktion besteht in der schnellst möglichen Verzögerung der Bewegung bis zum Stillstand, ohne den Antrieb zu beschädigen oder die Maschine zu verschieben. Je nachdem, ob die Bewegung vollständig gestoppt werden kann oder noch eine Restgeschwindigkeit beim Quetschen des Teiles besteht, entsteht ein Kraftpeak, der auf das Werkzeug wirkt. Um neben dem Resultat des gequetschten Teiles eine quantifizierbare Größe für das Ereignis zu haben, wird ein Systemalarm mit den Parametern Kraft des Kraftpeaks und der entsprechenden Position, ausgegeben.

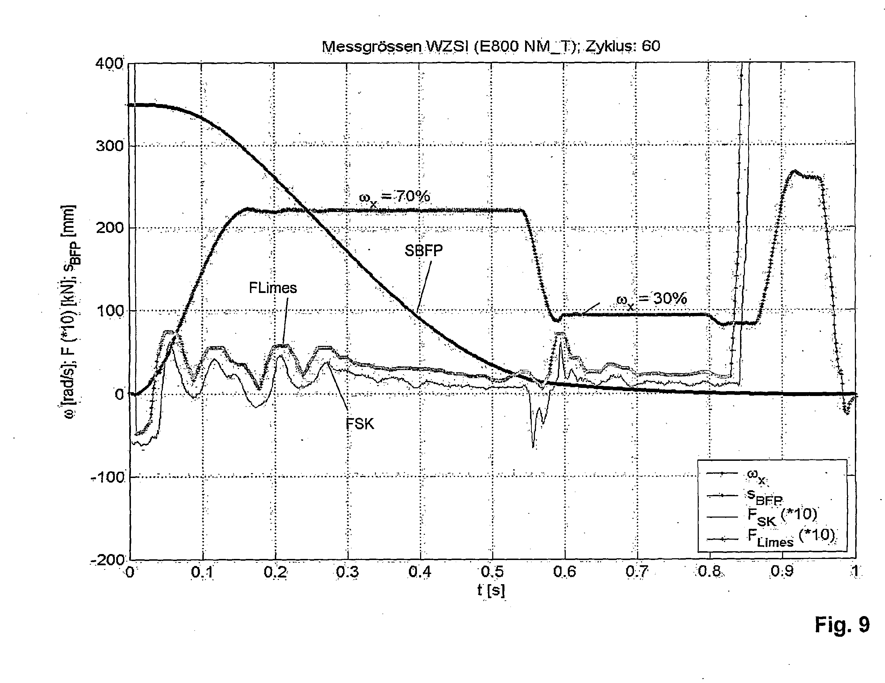

Die Figur 9 zeigt ein praktisches Beispiel für einen Messwertverlauf über der ganzen Bewegung des Schließwerkzeuges mit einer optimal angepassten Referenzkurve.

Nachfolgend wird die Erfindung anhand der Fahrsicherungen der Schließbewegung des Formschlusses, insbesondere der Werkzeugsicherung dargestellt. Prinzipiell lässt sich jede Linearachse auf die hier beschriebene Weise überwachen, unabhängig davon, ob die Antriebe hydraulisch, elektrisch oder pneumatisch sind. Die Kraftinformation wird aus einem Kraftaufnehmer, einer Differenzdruckmessung über Zylinder, Ölmotoren oder Pneumatikmotoren oder aus der Drehmomentinformation von elektrischen Antrieben gewonnen. Es ist naheliegend, dass nicht alle diese Varianten die gleiche Qualität der Überwachung liefern.

Das Ziel der Werkzeugsicherung ist, bei einem Schließvorgang durch ungewollte Ereignisse (in der Regel eingeklemmte Kunststoffteile) möglichst keine schädlichen Kräfte auf das Werkzeug wirken zu lassen. Dies setzt voraus, dass solche Ereignisse erkannt werden, und dass schnell genug reagiert werden kann. Um diese Ereignisse zu erkennen, wird die Kraft, die auf die bewegliche Formplatte wirkt, am Kniehebel durch Dehnmessstreifen gemessen. Da eingeklemmte Teile typischerweise die Kraft kontinuierlich ansteigen lassen, bis die Werkzeugbewegung gestoppt ist, beeinflusst die Auslöseempfindlichkeit den Stoppvorgang nur so weit, dass einige ms früher oder später reagiert wird. Von zentraler Wichtigkeit ist, dass keine Fehlauslösungen entstehen, weil sie zu lästigen Produktionsunterbrechungen führen und nicht toleriert werden können. Da die Werkzeugbewegung durch Beschleunigen und Abbremsen dauernd Trägheitskräfte erzeugt, die der Sensor misst, muss ein Weg gefunden werden, um diese Kräfte auszufiltern. Zu diesem Zweck muss die aktuelle Situation zuerst erfasst werden. Während der ersten Erfassung der Situation ist die Werkzeugsicherung noch nicht empfindlich. Gemäß der neuen Lösung soll immer eine minimale Werkzeugsicherung aktiv sein. Nach der Erfassung der aktuellen Situation kann eine empfindliche Werkzeugsicherung wirksam werden. Die Werkzeugsicherung kann nur dann empfindlich sein, wenn langsame Veränderungen, wie z.B. Reibung oder thermische Veränderungen, ausgefiltert werden. Dies birgt aber die Gefahr, dass schleichende Veränderungen nie zum Ansprechen der Werkzeugsicherung führen würden. Deshalb ist eine Begrenzung der Adaption vorzusehen, so dass z.B. Querzüge mit mangelhafter Schmierung zum Ansprechen führen, bevor sie angefressen haben.

Bewegungen von anderen Achsen (Ausstoßer, Aggregat, Handling, usw.) können über die Trägheitskräfte auch Auswirkungen auf das Signal der Kraftmessung haben, was zu berücksichtigen ist. Nachdem ein Werkzeugsicherungs-Ereignis detektiert ist, wird eine Stopp-Reaktion ausgelöst. Die Reaktionsgeschwindigkeit des Antriebes bestimmt das Resultat: je schneller gebremst werden kann, umso weniger weit baut sich die Quetschkraft auf, die kinetische Energie wird vom Antrieb aufgenommen anstatt vom eingequetschten Teil und vom empfindlichen Werkzeug.

Dazu sind zwei Aufgaben zu lösen:

- zuverlässige Detektierung der Fahrsicherungsstörungen ohne Fehlauslösung,
- schnelles Anhalten der Antriebe, um die Quetschkraft zu limitieren.

Um die Fahrsicherungsstörungen detektieren zu können, müssen die Messwerte vom Kraftsignal mit Referenzwerten verglichen werden.

- In allen Betriebszuständen soll eine Fehlersituation über den Kraftverlauf erkannt werden.
- Im Betriebszustand Produktion soll ohne Handeingriff eine optimale Empfindlichkeit auf Fehlersituationen erreicht werden. Fehlauslösungen werden nicht toleriert.
- Schleichende Veränderungen werden ausgefiltert bis zu einem einstellbaren Limit.

Für jeden der obenerwähnten drei Fälle müssen eigene Referenzwerte bestimmt werden.

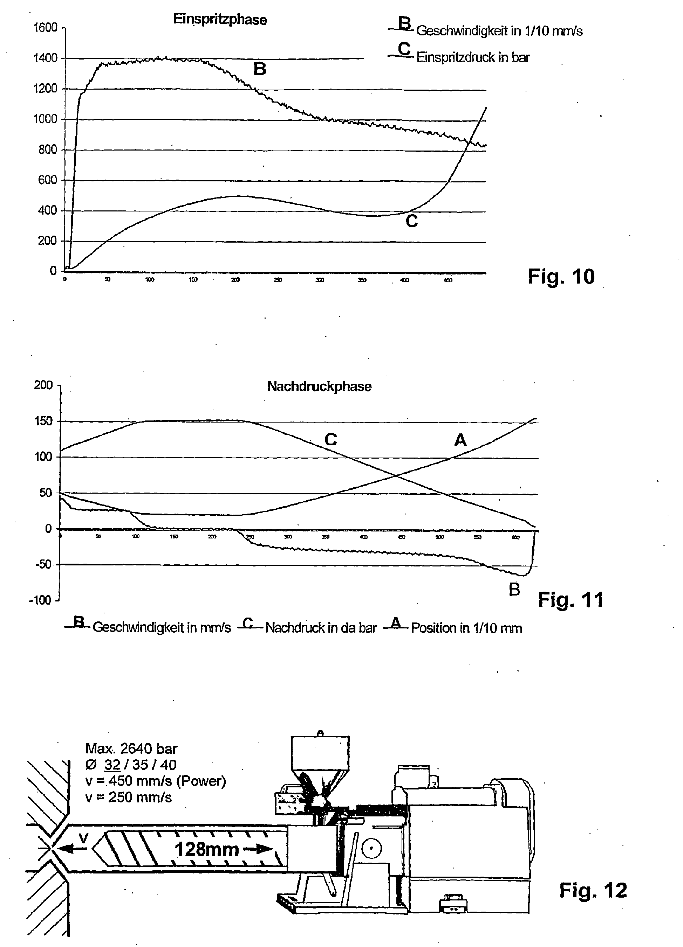

Die Figur 10 zeigt die Situation beim Einspritzen. Während dem Einspritzvorgang wird die Geschwindigkeit der Einspritzachse geregelt, und es resultiert daraus ein Einspritzdruck. Dieser ergibt sich aus der mechanischen (Werkzeug, Schneckengeometrie, usw.) und der physikalischen (Temperatur der Schmelze, Geschwindigkeit, usw.) Umgebung. Hier wird der Einspritzdruck als die zu überwachende Größe verwendet und darüber eine Lernkurve abgelegt. Das Verfahren, um die Vergleichskurve aufzubauen, ist das selbe wie bei der Werkzeugsicherung, denn es wird auch der gleiche Software-Code benutzt. Der Abstand der Vergleichskurve und die Anfahrphase wird über eine Konfiguration entsprechend eingestellt.

Die Figur 11 zeigt die Situation beim Nachdruck. Während der Nachdruckphase wird der Druck geregelt, und es resultiert daraus eine Bewegung der Einspritzachse. Hierbei kann die Geschwindigkeit oder der Weg als die zu überwachende Größe gemessen und mittels einer Vergleichskurve überwacht werden. Auch hier wird mit dem gleichen Stück Software die Vergleichskurve(n) über der Geschwindigkeit oder dem Weg aufgebaut. Nur ist die Eingangsgröße keine Kraft sondern eine Geschwindigkeit oder eine Position. In diesem Beispiel ist es sinnvoll, nicht nur die obere Grenze, sondern auch die untere Grenze zu überwachen. Dazu werden zwei Vergleichskurven benötigt, eine oberhalb und eine unterhalb des Ist-Wert-Verlaufes. Die beiden Kurven werden unabhängig voneinander mit demselben Algorithmus erstellt und abgelegt.

Die Figur 12 zeigt schematisiert ein Spritzaggregat.

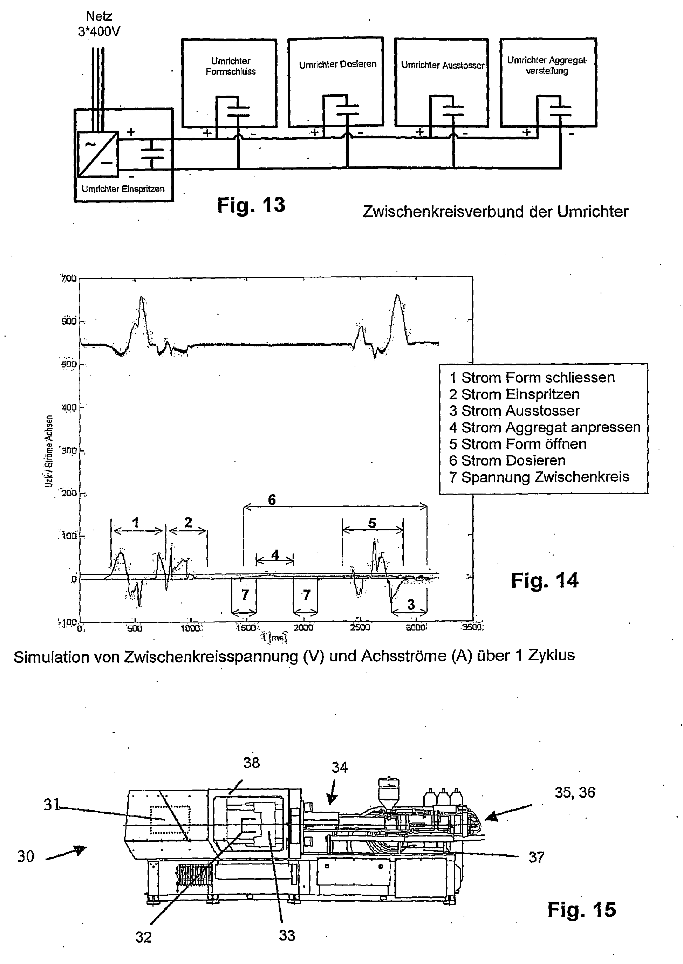

Die Figur 13 zeigt schematisch die Bauelemente für die Zwischenkreisspannung. Das Ziel ist die Überwachung der Zwischenkreisspannung über einem einzelnen Zyklus und von Zyklus zu Zyklus. Das Ergebnis kann auch für eine Qualitätsüberwachung verwendet werden.

Die Figur 14 zeigt die Überwachung der Zwischenkreisspannung über einen Zyklus. In der Grafik ist ein möglicher Verlauf der Zwischenkreisspannung, über den eine Vergleichskurve gelegt werden könnte, dargestellt. Die Eingangsgröße für die Fahrsicherung ist in diesem Fall eine Spannung. Auch hier ist es sinnvoll, die Ober- und die Untergrenze zu überwachen.

Mit Figur 15 ist symbolisch eine Spritzgießmaschine 30 dargestellt. Von der Vielzahl der Einzelkomponenten "X" sind nur die folgenden angedeutet. Antrieb bzw. Achse, Formbewegung 31, Ausstoßer 32, bewegliche Form bzw. Werkzeug 33, Schnecke 34, Linearantrieb der Schnecke (Linearachse) 35 und Rotationsantrieb der Schnecke (Rotationsachse) 36, Aggregat 37, Schutzverdeck 38.

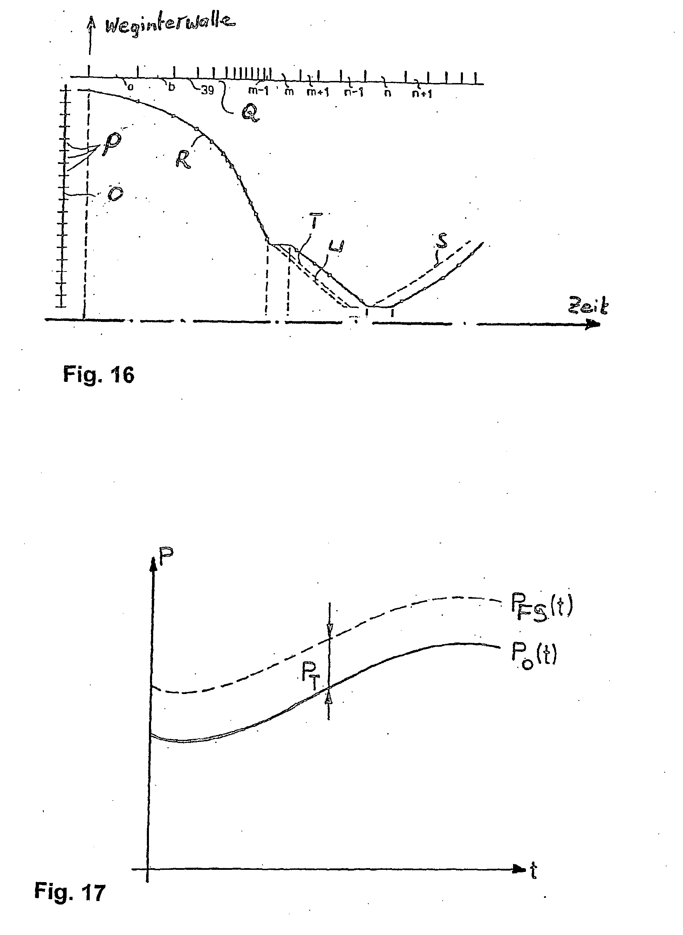

Die Figur 16 zeigt die Figur 2 der EP 0 025 987. Bei dieser Lösung des Standes der Technik ist die Fahrsicherung gleichsam in die Steuerung des Fahrweges des Werkzeugträgers integriert. Die senkrechte Achse ist mit "O" bezeichnet, wobei P die Zeitintervalle darstellt. Die waagrechte Achse Q ist die Zeitachse. Gemäß der EP 0 025 987 wird der Verlauf der Kurve R in optimaler Weise an einen vorgegebenen Wert angepasst. In dem mit T und U bezeichneten Bereich werden zuerst obere, entweder von einem Rechner vorgegebene oder von Hand ermittelte Werte vorgegeben, so dass sich in folgenden Spritzzyklen korrigierte Kurven T bzw. U einstellen.

Die Figur 17 zeigt die Figur 1 der EP 0 096 193 und stellt eine im Stand der Technik häufig angewendete Lösung für die Werkzeugsicherung dar. Die Einstellung des Gerätes erfordert die Durchführung eines Schließvorganges bei leerem Werkzeug mit einem minimalen Druckverlauf po(t) und mit der Vorgabe eines fixen Toleranzwertes und das sich daraus ergebende Toleranzband Pfs(t). Dadurch kann eine Schließbehinderung sofort erkannt und das Signal zur unmittelbaren Beendigung des Schließvorganges benutzt werden.

**Patentansprüche**

1. Verfahren zur Steuerung und Überwachung von repetitiven Abläufen an Spritzgiessmaschinen und / oder Handlingsgeräten zu Spritzgiessmaschinen und Erkennen von Abweichungen bzw. Störungen in Bezug auf den Ablauf, wobei für die Fahrsicherung wenigstens eine durch den Ablauf eines Teilprozess beeinflusste messbare Grösse in Bezug auf die Ablaufüberwachung in kurzen Abtastintervallen automatisch erfasst und mit vorgebbaren Grenzwerten verglichen wird, wobei bei der ersten Inbetriebnahme eine Start-Referenzkurve mit einer Startsicherheit festgelegt wird,
**dadurch gekennzeichnet,**

   a) **dass** die Grenzwerte aus Abtastgruppen von früheren Abtastwerten von vorangehenden Zyklen des selben Ablaufes über einen Algorithmus gebildet und
   b) selbstlernend als Vorgabe zur Bildung von Vergleichsgrenzwerten und von einer Betriebsreferenzkurve verwendet werden, wobei eine Start-Referenzkurve für die Folgezyklen stufenweise selbstadaptierend auf die Betriebsreferenzkurve abgesenkt und
   c) die erfasste messbare Grösse mit der Betriebsreferenzkurve verglichen wird.

2. Verfahren nach Anspruch 1,
wobei eine maximale Empfindlichkeit automatisch an Prozessstreuungen von Schuss zu Schuss angepasst wird für eine Überwachung und höchstmöglicher Empfindlichkeit, jedoch ohne Fehlansprechung, und in Abtastintervallen die momentanen Druck- / Kraft-Ist-Werte der Fahrbewegungen überwacht und die Fahrsicherung jeder Situation über dem ganzen Fahrweg angepasst wird.

3. Verfahren nach Anspruch 2,
wobei die Empfindlichkeit in Bezug auf einen Alarm oder Abbruchentscheid automatisch an die Prozesstreuungen angepasst wird.

4. Verfahren nach einem der Ansprüche 1 bis 3,
wobei beim ersten Ablauf eine Start-Referenz mit einer Startsicherheit festgelegt wird, wobei die Start-Vergleichswertkurve für die Folgezyklen laufend auf eine Betriebs-Vergleichskurve abgesenkt wird.

5. Verfahren nach einem der Ansprüche 1 bis 4,
wobei repetitive Fahrbewegungen von beweglichen Komponenten der Spritzgiessmaschine und / oder von Handlingsgeräten zu Spritzgiessmaschinen mittels in Abtastintervallen erfassten momentanen Druck- / Kraft-Ist-Werten, zumindest in Teilabschnitten der Fahrbewegung, überwacht werden.

6. Verfahren nach einem der Ansprüche 1 bis 5,
wobei mit dem Algorithmus Intervallgrenzwerte bzw. Gruppengrenzwerte für die Betriebsreferenzkurve ermittelt und für die Folgezyklen zugrunde gelegt werden.

7. Verfahren nach einem der Ansprüche 1 bis 6,
wobei Schwankungen im Höchstverlauf (Peaks) innerhalb einer Gruppe von nacheinanderfolgenen Abtastwerten erfasst und Veränderungen der Gruppengrenzwerte von Zyklus zu Zyklus

   a) bei Erhöhung der abgetasteten Werte für den Folgezyklus unmittelbar und
   b) bei Senkung der abgetasteten Werte verzögert berücksichtigt werden.

8. Verfahren nach einem der Ansprüche 1 bis 7,
wobei Schwankungen im Tiefstverlauf innerhalb einer Gruppe von nacheinanderfolgenden Abtastwerten erfasst und Veränderungen der Gruppengrenzwerte von Zyklus zu Zyklus

   a) bei Erhöhung der abgetasteten Werte für den Folgezyklus verzögert und
   b) bei Senkung der abgetasteten Werte unmittelbar berücksichtigt werden.

9. Verfahren nach einem der Ansprüche 1 bis 8,
wobei die einzelnen Grenzwerte für die Überwachung der Abtastwerte aus den Gruppengrenzwerten mit einer rechnerischen Funktion gebildet werden.

10. Verfahren nach einem der Ansprüche 1 bis 9,
wobei aus mehreren bzw. vielen nacheinanderfolgenden Abtastwerten ein Gruppengrenzwert errechnet und aus allen errechneten nacheinanderfolgenden Gruppengrenzwerten eine Referenzkurve gebildet wird.

11. Verfahren nach einem der Ansprüche 1 bis 10,
wobei die Anzahl der Abtastwerte pro Gruppe und die Position bzw. der Zeitpunkt der Gruppe im Ablauf innerhalb eines Teilprozesses situativ festgelegt wird.

12. Verfahren nach einem der Ansprüche 1 bis 11,
wobei nur in Teilbereichen der Fahrbewegung Vergleichsgrenzwerte ermittelt werden.

13. Verfahren nach einem der Ansprüche 1 bis 12,
wobei für eine oder mehrere Gruppen von Abtastwerten aufgrund des Grenzwertes eine Toleranz für einen Alarm- oder einen Abbruchentscheid für die Fortsetzung des Ablaufes festgelegt wird.

14. Verfahren nach Anspruch 12 oder 13,
wobei die Abschaltung statistisch entschieden wird, wobei die Toleranz vorzugsweise so festgelegt wird, dass bei zwei- oder mehrfachem Ueberschreiten der Referenzkurve ein Signal für den Bewegungsabbruch an die Maschinensteuerung abgegeben wird.

15. Verfahren nach einem der Ansprüche 1 bis 14,
wobei jeweils eine nicht geregelte Grösse eines Ablaufes bzw. Verlaufes überwacht wird, insbesondere eine Geschwindigkeit (m/s), ein Druck (kg/cm2), eine Kraft (N), ein Weg oder ein Drehmoment.

16. Verfahren nach Anspruch 15,
wobei eine Komponente ohne bewegte Teile, insbesondere eine Spannung (V), oder den Strom (A) überwacht.

17. Vorrichtung zur Steuerung und Überwachung von repetitiven Abläufen einer Spritzgiessmaschine und / oder Handlingsgeräten zu Spritzgiessmaschinen und Erkennen von Abweichungen bzw. Störungen in Bezug auf den Ablauf, zur Fahrsicherung, wobei im normalen Produktionsbetrieb im repetitiven Ablauf bzw. Verlauf Grenzwerte vorgegeben sind und die Vorrichtung Speicher - / Rechnermittel sowie Sensormittel aufweist, über welche innerhalb eines Teilprozesses beeinflusste messbare Grössen in Bezug auf die Ablaufüberwachung in kurzen Abtastintervallen automatisch erfassbar und mit vorgebbaren Grenzwerten vergleichbar sind,
**dadurch gekennzeichnet,**
**dass** die Speicher- / Rechnermittel ausgebildet sind zur Bildung von Grenzwerten aus Abtastgruppen von früheren Abtastwerten von vorangehenden Zyklen desselben Ablaufes über einen Algorithmus, dass die Speicher- / Rechnermittel ausgebildet sind, um die Grenzwerte selbstlernend als Vorgabe zur Bildung von Vergleichsgrenzwerten und von einer Betriebsreferenzkurve zu verwenden, und dass die Speicher- / Rechnermittel ausgebildet sind, um die erfasste messbare Grösse mit einer Betriebsreferenzkurve zu vergleichen, wobei die Speicher- / Rechnermittel derart ausgebildet sind, dass im Falle der Inbetriebnahme der Maschine die Betriebsreferenzkurve in Bezug auf vorgebbare Grenzwerte absenkbar ist.

18. Vorrichtung nach Anspruch 17,
wobei sie Speicher- / Rechnermittel und insbesondere Sensormittel aufweist zur Überwachung von repetitiven Fahrbewegungen von beweglichen Teilen der Spritzgiessmaschine und / oder Handlingsgeräten zu der Spritzgiessmaschine, über welche mittels Abtastintervallen momentane Druck- / Kraft-Ist-Werte, zumindest in Teilabschnitten der Fahrbewegung erfassbar sind, wobei die Fahrbewegung über die Maschinensteuerung aktiv vorgebbar ist.

19. Vorrichtung nach einem der Ansprüche 17 oder 18,
wobei sie Speicher- / Rechnermittel aufweist, über welche die Grenzwerte adaptiv von Fahrbewegung zu Fahrbewegung nachführbar und für die automatische Erkennung von Störungen sowie die Abgabe von Störmeldesignalen an die Maschinensteuerung ausgebildet sind.

20. Vorrichtung nach einem der Ansprüche 17 bis 19,
wobei die beweglichen Teile den Formschluss und / oder die Formhöheneinstellung und / oder die beweglichen Teile, das Einspritzaggregat und / oder die Schneckeneinspritzbewegung und / oder die Schneckenrotation und / oder einen Einspritzkolben und / oder die beweglichen Teile, den Ausstosser und / oder die Kernzüge und / oder die Vorrichtungen zur Spritzgiessteileentnahme aus den offenen Formen betreffen.

**21.** Vorrichtung nach einem der Ansprüche 17 bis 20,
wobei der Ablauf das Einspritzen, insbesondere die nicht geregelte Grösse als Kraft oder Geschwindigkeit betrifft.

**22.** Vorrichtung nach einem der Ansprüche 17 bis 21,
wobei die beweglichen Teile die spezifischen Achse einer PET-Maschine für die Herstellung von Preformen, insbesondere einen Entnahmeroboter und / oder eine Übergabestation und / oder eine Kühlstation betreffen.

**23.** Vorrichtung nach einem der Ansprüche 17 bis 22,
wobei der Ablauf bzw. Verlauf die Spannung und / oder den Strom betrifft.

**24.** Vorrichtung nach einem der Ansprüche 17 bis 23,
wobei die Spritzgiessmaschinensteuerung Speichermittel aufweist zur Speicherung der für einen speziellen Spritzgiessauftrag ermittelten optimalen Empfindlichkeit und Vorgabe für einen nachfolgenden neuen Spritzgiessauftrag, derart, dass bei Beginn eines ersten Spritzzyklus die Fahrsicherung bereits unterlegt ist, derart, dass der Spritzgiessauftrag ohne Voreinstellung der Fahrsicherung mit voller Fahrsicherung durchführbar ist.

**Claims**

**1.** A method for controlling and monitoring repetitive operational sequences in injection moulding machines and/or handling units to injection moulding machines and for identifying abnormalities or respectively disruptions with regard to the operational sequence, wherein for security of travel at least one measurable quantity which is influenced by the operational sequence of a partial process is automatically recorded with regard to the operational sequence monitoring in short sampling intervals and compared with presettable limit values, wherein on first putting into operation, a start reference curve is established with start security, **characterized in that**

a) the limit values are formed from sampling groups of earlier sampled values of preceding cycles of the same operational sequence via an algorithm and
b) are used in a self-learning manner as parameter for the formation of comparative limit values and of an operating reference curve, wherein a start reference curve for the subsequent cycles is lowered gradually in a self-adapting manner to the operating reference curve and
c) the recorded measurable quantity is compared with the operating reference curve.

**2.** The method according to Claim 1,
wherein a maximum sensitivity is automatically adapted to process variations from course to course for a monitoring and highest possible sensitivity, but without a negative response, and the instantaneous pressure/force actual values of the travel movements are monitored in sampling intervals and the travel security of each situation is adapted over the entire travel path.

**3.** The method according to Claim 2,
wherein the sensitivity is automatically adapted to the process variations with regard to a decision to alert or terminate.

**4.** The method according to one of Claims 1 to 3, wherein on the first operational sequence a start reference is established with a start security, wherein the start comparative value curve is lowered for the subsequent cycles continuously to an operating comparative curve.

**5.** The method according to one of Claims 1 to 4, wherein repetitive travel movements of movable components of the injection moulding machine and/or of handling units to injection moulding machines are monitored by means of instantaneous pressure/force actual values, recorded in sampling intervals, at least in partial sections of the travel movement.

**6.** The method according to one of Claims 1 to 5, wherein interval limit vales or respectively group limit values for the operating reference curve are determined with the algorithm and are taken as a basis for the subsequent cycles.

**7.** The method according to one of Claims 1 to 6, wherein fluctuations in the highest course (peaks) within a group of successive sampled values are recorded and changes to the group limit values are taken into consideration from cycle to cycle

a) immediately on increasing of the sampled values for the successive cycle and

b) in a delayed manner on lowering of the sampled values.

8. The method according to one of Claims 1 to 7, wherein fluctuations in the lowest course within a group of successive sampled values are recorded and changes to the group limit values are taken into consideration from cycle to cycle

a) in a delayed manner on increasing of the sampled values for the successive cycle and

b) immediately on lowering of the sampled values.

9. The method according to one of Claims 1 to 8, wherein the individual limit values for the monitoring of the sampled values are formed from the group limit values with an arithmetical function.

10. The method according to one of Claims 1 to 9, wherein a group limit value is calculated from several or many successive sampled values and a reference curve is formed from all calculated successive group limit values.

11. The method according to one of Claims 1 to 10, wherein the number of sampled values per group and the position or respectively the point in time of the group in the operational sequence within a partial process is established according to situation.

12. The method according to one of Claims 1 to 11, wherein comparative limit values are determined only in partial areas of the travel movement.

13. The method according to one of Claims 1 to 12, wherein a tolerance for a decision to alert or terminate for the continuation of the operational sequence is established for one or more groups of sampled values on the basis of the limit value.

14. The method according to Claim 12 or 13, wherein the cut-off is decided statistically, wherein the tolerance is preferably established so that in the case of exceeding the reference curve twice or several times, a signal for the termination of movement is emitted to the machine control.

15. The method according to one of Claims 1 to 14, wherein respectively a non-regulated quantity of an operational sequence or respectively course is monitored, in particular a speed (m/s), a pressure (kg/cm2), a force (N), a path or a torque.

16. The method according to Claim 15, wherein a component without moving parts, in particular a voltage (V) or the current (A) is monitored.

17. A device for controlling and monitoring repetitive operational sequences of an injection moulding machine and/or handling units to injection moulding machines and for identifying abnormalities or respectively disruptions with regard to the operational sequence, for travel security, wherein in the normal production operation limit values are provided in the repetitive operational sequence or respectively course, and the device has memory/computational means and sensor means, via which measurable quantities influenced within a partial process are able to be recorded automatically in short sampling intervals with regard to the operational sequence monitoring and are able to be compared with presettable limit values,
**characterized in that**
the memory/computational means are configured to form limit values from sampled groups of previous sampled values of preceding cycles of the same operational sequence by means of an algorithm, that the memory/computational means are configured in order to use the limit values in a self-learning manner as parameter for the formation of comparative limit values and of an operating reference curve, and that the memory/computational means are configured in order to compare the recorded measurable quantity with an operating reference curve, wherein the memory/computational means are configured such that in the case of the machine being put into operation, the operating reference curve is able to be lowered with respect to presettable limit values.

18. The device according to Claim 17, having memory/computational means and in particular sensor means for monitoring repetitive travel movements of moving parts of the injection moulding machine and/or handling units to the injection moulding machine, via which, by means of sampling intervals, instantaneous pressure/force actual values are able to be recorded at least in partial sections of the travel movement, wherein the travel movement is able to be preset actively via the machine control.

19. The device according to one of Claims 17 or 18, having memory/computational means, via which the limit values are able to be tracked adaptively from travel movement to travel movement and are configured for the automatic identification of disruptions and the emission of disruption status signals to the machine control.

20. The device according to one of Claims 17 to 19, wherein the moving parts relate to the mould closure and/or the mould height setting and/or the moving parts relate to the injection unit and/or the worm injection movement and/or the worm rotation and/or an injection plunger and/or the moving parts relate to the ejector and/or the core pullers and/or the devices for removal of injection moulded parts from the open moulds.

21. The device according to one of Claims 17 to 20, wherein the operational sequence relates to the injecting, in particular the non-regulated quantity as force or speed.

22. The device according to one of Claims 17 to 21, wherein the moving parts relate to the specific axis of a PET machine for the production of preforms, in particular a removal robot and/or a transfer station and/or a cooling station.

23. The device according to one of Claims 17 to 22, wherein the operational sequence or respectively course relates to the voltage and/or the current.

24. The device according to one of Claims 17 to 23, wherein the injection moulding machine control has memory means for storage of the optimum sensitivity determined for a specific injection moulding order and parameter for a successive new
injection moulding order, such that at the start of a first injection cycle, the travel security is already supported such that the injection moulding order is able to be carried out without presetting of the travel security with full travel security.

**Revendications**

1. Procédé pour la commande et la surveillance automatique d'opérations répétitives d'une presse d'injection et/ou d'appareils de manipulation vers des presses d'injection et la reconnaissance d'écarts respectivement de défaillances par rapport à l'opération, sachant que pour la sécurité de transport, au moins une grandeur mesurable influencée par l'opération d'un processus partiel est détectée automatiquement à de courts intervalles de détection par rapport à la surveillance d'opération et est comparée à des valeurs limites prédéfinissables, sachant que lors de la première mise en service, une courbe de référence de départ avec une sécurité de départ est définie,
**caractérisé en ce**

a) **que** la valeur limite est formée de groupes de détection de valeurs de détection antérieures de cycles précédents de la même opération par le biais d'un algorithme et
b) **qu'**ils sont utilisés en auto-apprentissage comme objectif pour la formation de valeurs limites de comparaison et d'une courbe de référence de fonctionnement, sachant qu'une courbe de référence de départ pour les opérations suivantes s'adaptant automatiquement par étapes à la courbe de référence de fonctionnement est baissée et
c) **que** la grandeur mesurable détectée est comparée à la courbe de référence de fonctionnement.

2. Procédé selon la revendication 1, dans lequel une sensibilité maximale est adaptée coup par coup automatiquement à des dispersions de processus pour une surveillance et une sensibilité la plus élevée possible, toutefois sans erreur de réponse, et les valeurs réelles pression/force momentanées des mouvements de transport sont surveillées dans des intervalles de détection et la sécurité de transport de chaque situation est adaptée tout au long du chemin de transport.

3. Procédé selon la revendication 2, dans lequel la sensibilité est adaptée aux dispersions de processus par rapport à une décision d'alarme ou d'interruption.

4. Procédé selon l'une des revendications 1 à 3, dans lequel lors de la première opération, une référence de départ avec une sécurité de départ est déterminée, sachant que la courbe de valeur de comparaison de départ est baissée pour les cycles suivants en permanence à une courbe de comparaison de fonctionnement.

**5.** Procédé selon l'une des revendications 1 à 4, dans lequel des mouvements de transport répétitifs de composants mobiles de la presse d'injection et/ou d'appareils de manipulation vers des presses d'injection sont surveillés au moyen de valeurs réelles pression/force détectées momentanément à des intervalles de détection, au moins dans des sections partielles du mouvement de transport.

**6.** Procédé selon l'une des revendications 1 à 5, dans lequel des valeurs limites d'intervalle respectivement des valeurs limites de groupes sont calculées avec l'algorithme pour la courbe de référence de fonctionnement et servent de base pour les cycles suivants.

**7.** Procédé selon l'une des revendications 1 à 6, dans lequel des oscillations dans le tracé le plus élevé (crêtes) à l'intérieur d'un groupe de valeurs de détection successives sont détectées et des modifications des valeurs limites de groupe de cycle en cycle

    a) sont prises en compte directement pour le cycle suivant lorsque les valeurs détectées augmentent et
    b) sont prises en compte de manière retardée lorsque les valeurs détectées baissent.

**8.** Procédé selon l'une des revendications 1 à 7, dans lequel des oscillations dans le tracé le plus bas à l'intérieur d'un groupe de valeurs de détection successives sont détectées et des modifications des valeurs limites de groupe de cycle en cycle

    a) sont prises en compte de manière retardée pour le cycle suivant lorsque les valeurs détectées augmentent et
    b) sont prises en compte directement lorsque les valeurs détectées baissent.

**9.** Procédé selon l'une des revendications 1 à 8, dans lequel les différentes valeurs limites pour la surveillance des valeurs de détection sont formées avec une fonction de calcul à partir des valeurs limites de groupe.

**10.** Procédé selon l'une des revendications 1 à 9, dans lequel à partir de plusieurs respectivement de nombreuses valeurs de détection successives, une valeur limite de groupe est calculée et une courbe de référence est formée à partir de toutes les valeurs limites de groupe successives calculées.

**11.** Procédé selon l'une des revendications 1 à 10, dans lequel le nombre de valeurs de détection par groupe et la position respectivement le moment du groupe dans l'opération est défini de manière situationnelle à l'intérieur d'un processus partiel.

**12.** Procédé selon l'une des revendications 1 à 11, dans lequel des valeurs limites de comparaison sont calculées uniquement dans des zones partielles du mouvement de transport.

**13.** Procédé selon l'une des revendications 1 à 12, dans lequel pour un ou plusieurs groupes de valeurs de détection, du fait de la valeur limite, une tolérance pour une décision d'alarme ou d'interruption est définie pour la poursuite de l'opération.

**14.** Procédé selon la revendication 12 ou 13, dans lequel l'arrêt est décidé de manière statistique, sachant que la tolérance est définie de préférence de manière à ce qu'en cas de deux ou plusieurs dépassements de la courbe de référence, un signal d'interruption de mouvement soit envoyé à la commande de la machine.

**15.** Procédé selon l'une des revendications 1 à 14, dans lequel respectivement une grandeur d'une opération respectivement d'un tracé non réglée est surveillée, en particulier une vitesse (m/s), une pression (kg/cm$^2$) une force (N), un trajet ou un couple de rotation.

**16.** Procédé selon la revendication 15, dans lequel un composant sans pièces mobiles surveille en particulier une tension (V) ou le courant (A).

**17.** Dispositif pour la commande et la surveillance automatique d'opérations répétitives d'une presse d'injection et/ou d'appareils de manipulation vers des presses d'injection et la reconnaissance d'écarts respectivement de défaillances par rapport à l'opération, pour la sécurité de transport, sachant que dans le fonctionnement de production normal des valeurs limites sont prédéfinies dans l'opération respectivement le tracé répétitif et le dispositif présente des moyens de mise en mémoire/calcul ainsi que des moyens de capteurs par lesquels des grandeurs mesurables influencées dans un processus partiel peuvent être détectées automatiquement à de courts intervalles de détection par rapport à la surveillance d'opération et sont comparables à des valeurs limites prédéfinissables, **caractérisé en ce que** les moyens de mise en mémoire/calcul sont conçus pour former des valeurs limites à partir des groupes de détection de valeurs de détection antérieures de cycles précédents de la même opération par un algorithme, que les moyens de mise en mémoire/calcul sont conçus pour utiliser les valeurs limites en auto-apprentissage comme objectif de formation de valeurs limites de comparaison et d'une courbe de référence de fonctionnement et que les moyens de mise en mémoire/calcul sont conçus pour comparer la grandeur mesurable détectée à une courbe de référence de fonctionnement, sachant que les moyens de mise en mémoire/calcul sont ainsi conçus qu'en cas de mise en fonctionnement de la presse, la courbe de référence de fonctionnement peut être baissée par rapport à des valeurs limites prédéfinissables.

18. Dispositif selon la revendication 17, qui présente des moyens de mise en mémoire/calcul et en particulier des moyens de capteurs pour surveiller des mouvements de transport répétitifs de composants mobiles de la presse d'injection et/ou d'appareils de manipulation vers la presse d'injection par lesquels des valeurs réelles pression/ force détectées momentanément à des intervalles de détection peuvent être détectées au moins dans des sections partielles du mouvement de transport, sachant que le mouvement de transport peut être prédéfini de manière active par la commande de la machine.

19. Dispositif selon l'une des revendications 17 ou 18, qui présente des moyens de mise en mémoire/calcul par lesquels les valeurs limites peuvent être suivies de manière adaptative de mouvement de transport en mouvement de transport et sont formées pour la reconnaissance automatique de défaillances ainsi que la fourniture de signaux de défaillance à la commande de la machine.

20. Dispositif selon l'une des revendications 17 à 19, dans lequel les pièces mobiles concernent la fermeture du moule et/ou le réglage en hauteur du moule et/ou les pièces mobiles, le groupe d'injection et/ou le mouvement d'injection de la vis sans fin et/ou la rotation de la vis sans fin et/ou un piston d'injection et/ou les pièces mobiles, le poussoir et/ou les dispositifs d'arrachage de la carotte et/ou les dispositifs de prélèvement des pièces moulées des moules ouverts.

21. Dispositif selon l'une des revendications 17 à 20, dans lequel l'opération considère l'injection comme une force ou une vitesse, en particulier la grandeur non réglée.

22. Dispositif selon l'une des revendications 17 à 21, dans lequel les pièces mobiles concernent les axes spécifiques d'une machine PET pour la fabrication de préformes, en particulier un robot d'enlèvement et/ou un poste de remise et/ou un poste de refroidissement.

23. Dispositif selon l'une des revendications 17 à 22, dans lequel l'opération respectivement le tracé concerne la tension et/ou le courant.

24. Dispositif selon l'une des revendications 17 à 23, dans lequel la commande de la presse d'injection présente des moyens de mise en mémoire pour sauvegarder la sensibilité optimale calculée pour une application spéciale de l'injection et définir un objectif pour une nouvelle application d'injection suivante de telle manière que lorsqu'un premier cycle d'injection commence, la sécurité de transport est déjà placée en-dessous de telle manière que l'application d'injection puisse être effectuée avec une sécurité de transport totale sans pré-réglage de la sécurité de transport.

**FIG 1**

**FIG 2**

## Referenzkurvenbildung

### erster Schritt

**Fig. 3**

Abtastung 1ms

$M_n$ = Maximalwert $M_a$ (Zeitliche Verschiebung um + 10 ms)

### Zweiter Schritt

**Fig. 4**

(Zeitliche Verschiebung um – 10 ms)          *statt 10ms auch 8 oder 16 ms möglich

| Referenzwert | $R_{n+2}$ | = | if | $M_{n+2} > M_{n+3}$ | then | $M_{n+2}$ |
|---|---|---|---|---|---|---|
| | | | | | Else | $M_{n+3}$ |
| | $R_{n+3}$ | = | if | $M_{n+3} > M_{n+4}$ | then | $M_{n+3}$ |
| | | | | | Else | $M_{n+4}$ |

## Vergleich mit Referenzkurve

**Fig. 5**

Interpolation der Zwischenwerte

Druck/Kraft
Ist-Werte

**Fig. 6**

Referenzkurve

Gruppen-
Abtastwert

Lernkorrekturwert $L_n$

Referenzkurve

IST-Signal

**Fig. 7**

Fig. 8

Der Startwert wird pro Zyklus um Betrag 1 reduziert bis Wert 1 erreicht wird.
Dadurch wird pro Zyklus der Wert

$$S_n = \frac{S_{n-1}}{2}$$  solange $S_n$ > Wert 1

danach

wenn $S_n$ < Wert 1
dann $S_n$ = Wert 1

$$S_n = S_{n-1} - Betrag 1$$  bis $S_n$ => gegen 0 (z.B. ½ KN)

Sinnvolle Werte für Werkzeugsicherung sind:

Startwert $S_1$  = 5 kN
Wert 1  = 1 kN
Betrag 1  = 0.1 kN

Fig. 9

EP 1 920 300 B1

**Einspritzphase**

B ——Geschwindigkeit in 1/10 mm/s
C ——Einspritzdruck in bar

**Fig. 10**

**Nachdruckphase**

—B— Geschwindigkeit in mm/s  —C— Nachdruck in da bar  —A— Position in 1/10 mm

**Fig. 11**

Max. 2640 bar
Ø 32 / 35 / 40
v = 450 mm/s (Power)
v = 250 mm/s

128mm

**Fig. 12**

Netz
3*400V

| Umrichter Formschluss | Umrichter Dosieren | Umrichter Ausstosser | Umrichter Aggregat- verstellung |

Umrichter Einspritzen

## Fig. 13

Zwischenkreisverbund der Umrichter

1 Strom Form schliessen
2 Strom Einspritzen
3 Strom Ausstosser
4 Strom Aggregat anpressen
5 Strom Form öffnen
6 Strom Dosieren
7 Spannung Zwischenkreis

## Fig. 14

Simulation von Zwischenkreisspannung (V) und Achsströme (A) über 1 Zyklus

## Fig. 15

**Fig. 16**

**Fig. 17**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4345034
- EP 025987 A
- EP 0096183 A
- EP 1072388 A2
- JP 4368832 A
- EP 0025987 A
- EP 0096193 A